# EUROPEAN PATENT SPECIFICATION

(11) **EP 1 923 596 B1**
(45) Date of publication and mention of the grant of the patent: **26.12.2012**
(21) Application number: 06797636.5
(22) Date of filing: 07.09.2006
(51) Int. Cl.: F16F 9/50, F16F 9/32, F16F 9/348, F16F 9/44, F16F 9/46, F16F 9/06

(54) **HYDRAULIC SHOCK ABSORBER**
HYDRAULISCHER STOSSDÄMPFER
AMORTISSEUR HYDRAULIQUE

(30) Priority: 09.09.2005 JP 2005262224
(43) Date of publication of application: 21.05.2008
(73) Proprietor: Yamaha Hatsudoki Kabushiki Kaisha, Iwata-shi, Shizuoka 438-8501 (JP)
(72) Inventor: SAWAI, Seiji, Iwata-shi, Shizuoka, 438-8501 (JP)
(74) Representative: Grünecker, Kinkeldey, Stockmair & Schwanhäusser
(86) International application number: PCT/JP2006/317776
(87) International publication number: WO 2007/029787

(56) References cited:
- EP-A1- 0 748 950
- JP-A- 01 295 043
- JP-A- 02 168 038
- JP-A- 08 312 710
- JP-A- 10 331 898
- JP-A- 2000 170 821

## Description

### Field of the Invention

The present invention relates to a method for absorbing shocks and a hydraulic shock absorber in which the damping force characteristics using a bulk modulus of a hydraulic fluid more effectively can be obtained when the moving speed of a piston rod in relation to a cylinder tube is slow as in the initial stage of compression action and extension action, in a case that the hydraulic shock absorber repeats the compression action and the extension action by a first and second input forces applied from outside. A hydraulic shock absorber in accordance with the preamble of claim 2 is known from EP 0 748 950 A1.

### Technical Background

The hydraulic shock absorber of a conventional type is shown in the Patent Document 1. According to this Patent Document, the hydraulic shock absorber is inserted in the cylinder tube slidably in the axial direction, and the hydraulic shock absorber includes: first and second pistons for dividing the inside of the cylinder tube to a first chamber, an intermediate chamber, and a second chamber from one end to another end in this order; and a piston rod in which one end is connected to the first and the second pistons, and another end protrudes out of the cylinder tube from another end of the cylinder tube.

The shock absorber also includes: a first damping force generating device for absorbing a first input force, by flowing oil from the first chamber through the first piston to the intermediate chamber, when the first input force is applied from outside in order to insert the piston rod deeper into the cylinder tube; and a second damping force generating device for absorbing the first input force by flowing oil from the intermediate chamber through the second piston to the second chamber, when the first input force is applied.

The first and second damping force generating devices work concurrently to generate the damping force, when the shock absorber is applied with the first input force from outside and performs an action to insert the first and the second pistons and piston rods into the cylinder tube, that is when the shock absorber is in the compression action.

The shock absorber in above case has following damping force characteristics. That is, increase gradient of the damping force is large when the compression action of the shock absorber is at the initial stage and when the moving speed of the piston rod in relation to the cylinder tube is slow. After this, when the moving speed increases, the damping force glows higher, however, its increase gradient decreases gradually ([0040]-[0043] in Patent Document 1).
Patent Document 1: JP-A-Hei 10-331898

### Disclosure of the Invention

### Problem to be Solved by the Invention

Now, when the vehicle is driving, at the initial stage of the compression action in which the shock absorber equipped to this vehicle is applied with the first input force from the driving road surface through the vehicle wheel side, a first orifice and bypass passage that are a part of the first and second damping force generating devices work together concurrently and generate the damping force. At this time, the second chamber expands, and its hydraulic pressure decreases lower than that of the intermediate chamber.

In general, a hydraulic fluid used in the shock absorber is a compressible fluid with a characteristic performing a volume change against pressurerization or decompression (hereinafter, this is simply referred to as "bulk modulus") . A capacity of the second chamber alone is small, so if compared with the imaginary chamber that has same pressure value and larger capacity than the second chamber, the volume change amount of the oil in the second chamber according to the "bulk modulus" is smaller (harder) than that of the imaginary chamber.

Therefore, even at the initial stage in the compression action of the shock absorber, the hydraulic pressure in the second chamber rapidly decreases according to the entering action of the second piston. Following this, the oil flows immediately from the intermediate chamber through the second damping force generating device to the second chamber in order to generate the damping force. In other words, response of the damping force generation in relation to a time that outside force is entered, which is the first input force applied to the shock absorber, becomes high (hereinafter this is simply referred to as "response").

Thus, at the initial stage in the compression action of the shock absorber, the driver tends to be given the impression of hard, because the "response" is high. This is not preferable since it may become an obstacle for improving the driving comfortability of the vehicle.

On the other hand, when the shock absorber is applied with a second input force from outside, then the first and the second pistons, and piston rods perform an action to exit from the cylinder tube, that is, when the shock absorber is in the extension action, the second chamber performs compression at the initial stage, and its hydraulic pressure becomes higher than that of the intermediate chamber.

Here, the capacity of the second chamber alone is small, so the volume change amount by the "bulk module" of the oil in this second chamber is small (hard). Therefore, the hydraulic pressure in the second chamber rapidly increases according to the exit action of the second piston, even at the initial stage in the extension action of the shock absorber. Following this, the oil immediately tends to flow from the second chamber through the second damping force generating device to the intermediate chamber. That is, the "response" becomes higher.

Therefore, a driver tends to be given the impression of hard from the vehicle even at the initial stage in the extension action of the shock absorber, and the same problem as mentioned above may occur.

### Means for Solving the Problem

The present invention is made in view of above-mentioned circumstances. The object of the present invention is to provide a method for absorbing shocks and a hydraulic shock absorber in which the "response" is restrained to be low when the moving speed of the piston rod in relation to the cylinder tube is slow, while the "response" is set high when the first and the second input forces are large and the moving speed is fast, in a case that at the initial stage in the compression and the extension actions of hydraulic shock absorber performs when the first and the second input forces are applied from outside.

Another object of the present invention is to provide a soft driving feel to a vehicle by equipping the shock absorber to a vehicle, and at the same time to provide further improved driving feel and driving safety by absorbing shocks without delay when the large first and second input forces are applied.

The above objective (method) is performed by the features of claim 1. Moreover, the above objective (hydraulic shock absorber) is performed by features of claim 2. Namely, the hydraulic shock absorber according to the present invention includes: first and second pistons that are inserted in a cylinder tube in the way they can slide in the axial way, and divide the inside of the cylinder tube to a first chamber, an intermediate chamber, and a second chamber from one end to another end in this order; a piston rod in which one end is connected the first and the second pistons, and another end is protruded outside of this cylinder tube from another end of the cylinder tube; a pressure side first damping force generating device for absorbing the first input force by flowing oil from the first chamber through the first piston to the intermediate chamber, when the first input force is applied from outside to enter the piston rod in the cylinder tube; a pressure side second damping force generating force for absorbing the first input force by flowing oil from the intermediate chamber through the second piston to the second chamber when the first input force is applied; an extension side first damping force generating device for absorbing the second input force by flowing oil from the intermediate chamber through the first piston to the first chamber when the second input force is applied from outside to evacuate the piston rod from the cylinder tube; an extension side second damping force generating device for absorbing the second input force by flowing oil from the second chamber through the second piston to the intermediate chamber when the second input force is applied; in which the damping forces of the pressure side and the extension side first damping force generating devices are set higher than that of the pressure side and the extension side second damping force generating devices when the moving speed of the piston rod in relation to the cylinder tube is slow, and the damping forces of the pressure side and the extension side second damping force generating devices are set higher than that of the pressure side and the extension side first damping force generating devices when the moving speed is fast; and a gas enclosure chamber filled with gas is connected to the first chamber through a free piston.

In addition to the above-mentioned invention, the pressure side and the extension side first damping force generating devices may include, pressure side and extension side first valves for flowing oil to pass through the first piston by a first hydraulic pressure difference between the first chamber and the intermediate chamber when the first and the second input forces are applied, and a first orifice that passes through the first piston. And the pressure side and the extension side second damping force generating devices may include pressure side and extension side second valves for flowing oil to pass through the second piston by a second hydraulic pressure difference between the intermediate chamber and the second chamber when the first and the second input forces are applied, and a second orifice that passes through the second piston. And open valve pressure characteristics of the pressure side and the extension side first valves may be set weaker than that of the pressure side and the extension side second valves. And a cross section of the first orifice may be smaller than that of the second orifice.

In addition to the above-mentioned invention, a cross section of the second orifice may be set one-and-half to ten times of a cross section of the first orifice.

In addition to above-mentioned invention, kinetic viscosity of the oil may be set four to ten centistokes (cSt) at 40°C.

In addition to the above-mentioned invention, a regulation device may be disposed so that a value of a cross section of the second orifice is variable.

In addition to the above-mentioned invention, an outer diameter of a part of the piston rod connected to the first piston may be set smaller than an outer diameter of other part of the piston rod connected to the second piston.

In addition to the above-mentioned invention, another cylinder tube may be disposed as a separate unit from the cylinder tube, and the free piston may be inserted in the cylinder tube slidably in the axial direction, and one of two chambers in the cylinder tube divided by this free piston may be filled with the oil then set as an oil storage chamber that is in communication with the first chamber, while the other chamber may be set as the gas enclosure chamber filled with high pressure gas.

In addition to the above-mentioned invention, in the axial direction of the cylinder tube, an intermediate piston inserted in the cylinder tube slidably in the axial direction may be disposed, so as to locate between the first piston and the second piston, and the pressure side and the extension side intermediate damping force generating devices, which have same configuration and same action as the pressure side and the extension side first damping force generating devices or the pressure side and the extension side second damping force generating devices are disposed to the intermediate piston, and the intermediate piston may be connected to the one end of the piston rod.

In addition to the above-mentioned invention, the free piston is inserted in the first chamber in the cylinder tube slidably in the axial direction, between two chambers in the first chamber comparted by the free piston in reference to the free piston, the opposite chamber to the first piston may be set as the gas enclosure chamber.

In addition to the above-mentioned invention, the regulation device may have a needle valve inserted to a through-hole formed on the shaft center of the piston rod, and a cross section of a part of the second orifice formed on the shaft center of the piston rod may be set variable by the needle valve.

In addition to the above-mentioned invention, an outer diameter of a part of the piston rod connected to the first piston may be set smaller than an outer diameter of a part of the piston rod connected to the second piston.

In addition to the above-mentioned invention, the hydraulic shock absorber may be applied to a suspension system of a vehicle, and may be constructed between a vehicle body side of the vehicle and respective vehicle wheel side suspended to the vehicle body side.
Preferred embodiments of the present invention are laid down in the subclaims.

### Effect of the Invention

The following effects will be exerted by the present invention.

The hydraulic shock absorber in the present invention includes: first and second pistons that are inserted in a cylinder tube slidably in the axial way, and divide the inside of the cylinder tube to a first chamber, a intermediate chamber, and a second chamber from one end to another end in this order; a piston rod in which one end is connected the first and the second pistons, and another end is protruded outside of this cylinder tube from another end of the cylinder tube; a pressure side first damping force generating device for absorbing the first input force by flowing oil from the first chamber through the first piston to the intermediate chamber, when the first input force is applied from outside to enter the piston rod in the cylinder tube; a pressure side second damping force generating device for absorbing the first input force by flowing oil from the intermediate chamber through the second piston to the second chamber when the first input force is applied; an extension side first damping force generating device for absorbing the second input force by flowing oil from the intermediate chamber through the first piston to the first chamber when the second input force is applied from outside to evacuate the piston rod from the cylinder tube; an extension side second damping force generating device for absorbing the second input force by flowing oil from the second chamber through the second piston to the intermediate chamber; in which the damping forces of the pressure side and the extension side first damping force generating devices are set higher than that of the pressure side and the extension side second damping force generating devices when the moving speed of the piston rod in relation to the cylinder tube is slow, and the damping forces of the pressure side and the extension side second damping force generating devices are set higher than that of the pressure side and the extension side first damping force generating devices when the moving speed is fast; and a gas enclosure chamber filled with gas is connected to the first chamber through a free piston. Therefore, the following "action effect" is produced.

That is, when the hydraulic shock absorber is applied with the first input force and performs compression action, in general, the oil in the first chamber flows from this first chamber through the pressure side first damping force generating device in the first chamber to the intermediate chamber. Also, the oil in the intermediate chamber flows from the intermediate chamber through the pressure side second damping force generating device in the second piston to the second chamber. In this way, the pressure side first and second damping force generating devices try to generate the damping force concurrently, by flowing the oil in these.

In above case, at the initial stage of the compression action by the shock absorber, the first chamber is compressed, and its hydraulic pressure tries to rise, by the entering action of the first and the second pistons and the piston rod into the cylinder tube.

However, as described above, the gas enclosure chamber filled with gas is connected to the first chamber through the free piston. So, when the first chamber is compressed, and its hydraulic pressure starts to rise, the hydraulic pressure rise in the first chamber is restrained by the motion of the free piston and the compression of the gas in the gas enclosure chamber. Therefore, it is prevented to flow the oil immediately from this first chamber through the pressure side first damping force generating device to the intermediate chamber and the second chamber by the hydraulic pressure of the first chamber at the initial stage in the compression action of the shock absorber.

Here, as described above, when the moving speed of the piston rod in relation to the cylinder tube is small, the damping force of the pressure side first damping force generating device is larger than that of the pressure side second damping force generating device. Therefore, like at the initial stage in the compression action of the shock absorber, when the moving speed is slow, among the pressure side first and second damping force generating devices, the pressure side first damping force generating device generates the damping force dominantly, and the pressure side second damping force generating device barely generates the damping force. Therefore, the intermediate chamber and the second chamber, at back in the proceeding direction of the first and the second pistons working with the piston rod, decrease their pressure concurrently. These pressure decreases are generally same as each other, so the intermediate chamber and the second chamber function like a united single chamber.

In above case, a total capacity by the sum of each capacity of the intermediate chamber and the second chamber is larger than each single capacity of these, so the volume change amount by the "bulk modulus" of the oil in the intermediate chamber and the second chamber is kept large (soft) . Therefore, at the initial stage in the compression action of the shock absorber, even if the first and the second pistons are entered into the cylinder tube, the decrease speed of the hydraulic pressure in the intermediate chamber and the second chamber is restrained to be small. Therefore, it is prevented to flow the oil immediately from the first chamber through the pressure side first damping force generating device to the intermediate chamber and the second chamber. In other words, the "response" is restrained to be low at the initial stage in the compression action of the shock absorber, and it is prevented to suddenly restrain the entering of the piston rod into the cylinder tube.

As a result, for example, if the shock absorber is equipped to the vehicle, a vehicle provides a soft impression to a driver at the initial stage in the compression action of the shock absorber when the first input force is applied from the ground when the vehicle is driving. Therefore, an "action effect" that is an achievement to an improved driving feel on the vehicle is produced.

When the moving speed in the compression action increases, the damping force of the pressure side second damping force generating device becomes larger than the that of the pressure side first damping force generating device, then the pressure side second damping force generating device generates the damping force dominantly. Therefore, the second chamber at back in the moving direction of the second piston is expanded, and its hydraulic pressure decreases.

Here, the capacity of the second chamber alone is small, so the volume change amount by the "bulk module" of the oil in this second chamber is small (hard) . Therefore, according to the entering action of the second piston, the decrease speed of the hydraulic pressure in the second chamber becomes faster, then the "response" in the pressure side second damping force generating device becomes higher.

As a result, if the shock absorber is equipped to the vehicle, the impact energy based on the impact force applied to the vehicle is immediately absorbed by the pressure side second damping force generating device, when the moving speed is fast at the compression action of the shock absorber by the first input force applied from the ground, during the vehicle is driving. Therefore, another "action effect" that is achievement to an improved driving stability of the vehicle is also produced.

On the other hand, when the shock absorber 1 is applied with the second input force and performs an extension action, in general, the oil in the second chamber flows from this second chamber through the extension side second damping force generating device in the second piston toward the intermediate chamber. Also, the oil in the intermediate chamber flows from this intermediate chamber through the extension side first damping force generating device in the first piston toward the first chamber. In this way, the extension side first and second damping force generating devices try to generate the damping force concurrently, by flowing the oil respectively in these.

In above case, at the initial stage of the extension action in the shock absorber, the first chamber is expanded, and its hydraulic pressure tries to decrease, by the exit action of the first and the second pistons and the piston rod from the cylinder tube.

However, as described above, the gas enclosure chamber filled with gas is connected to the first chamber through the free piston. So, when the first chamber is expanded, and its hydraulic pressure starts to decrease, the hydraulic pressure decrease in the first chamber is restrained by the motion of the free piston and the expansion of the gas in the gas enclosure chamber. Therefore, it is prevented to flow the oil immediately from the intermediate chamber and the second chamber through the extension side first damping force generating device toward this first chamber at the initial stage in the extension action of the shock absorber.

Here, as described above, when the moving speed of the piston rod in relation to the cylinder tube is small, the damping force of the extension side first damping force generating device is larger than that of the extension side second damping force generating device. Therefore, like at the initial stage in the extension action of the shock absorber, when the moving speed is slow, among the extension side first and second damping force generating devices, the extension side first damping force generating device generates the damping force dominantly, and the extension side second damping force generating device barely generates the damping force. Therefore, the first chamber and the intermediate chamber, at back in the proceeding direction of the first and the second pistons working with the piston rod, decreases its pressure concurrently. These pressure decreases are generally same, so the intermediate chamber and the second chamber function like a united single chamber.

In above case, a total capacity by the sum of each capacity of the first chamber and the intermediate chamber is larger than each single capacity of these, so the volume change amount by the "bulk modulus" of the oil in the first chamber and the intermediate chamber is kept large (soft). Therefore, at the initial stage in the extension action of the shock absorber 1, even if the first and the second pistons exit from the cylinder tube, the increase speed of the hydraulic pressure in the intermediate chamber and the second chamber is restrained to be small. Therefore, it is prevented to flow the oil immediately from the intermediate chamber and the second chamber through the extension side first damping force generating device to the first chamber. In other words, the "response" is restrained to be low at the initial stage in the extension action of the shock absorber, and it is prevented to suddenly restrain the exit of the piston rod from the cylinder tube.

As a result, if the shock absorber is equipped to a vehicle, the vehicle provides a soft impression to a driver at the initial stage in the extension action of the shock absorber when the second input force is applied. Therefore, the driving feel on the vehicle is improved, and the "action effect" is more securely produced.

When the moving speed in the extension action increases, the damping force of the extension side second damping force generating device becomes larger than the that of the extension side first damping force generating device, then the extension side second damping force generating device generates the damping force dominantly. Therefore, the second chamber at the front of the moving direction of the second piston compresses, and its hydraulic pressure increases.

Here, the capacity of the second chamber alone is small, so the volume change amount by the "bulk module" of the oil in this second chamber is small (hard) . Therefore, according to the exit action of the second piston, the increase speed of the hydraulic pressure in the second chamber becomes faster, then the "response" in the extension side second damping force generating device becomes higher.

As a result, if the shock absorber is equipped to a vehicle, the impact energy based on the second input force is immediately absorbed by the extension side second damping force generating device, when the moving speed is fast at the extension action of the shock absorber by the second input force, during the vehicle is driving. Therefore, another "action effect", that is achievement to an improved driving stability of the vehicle, is more securely produced.

The following configuration is acceptable in above invention. That is, the pressure side and the extension side first damping force generating devices may include pressure side and extension side first valves for flowing oil in order to pass through the first piston by the first hydraulic pressure difference between the first chamber and the intermediate chamber, when the first and the second input forces are applied, and may include a first orifice that passes through the first piston. And the pressure side and the extension side second damping force generating devices may include pressure side and extension side second valves for flowing oil to pass through the second piston by the second hydraulic pressure difference between the intermediate chamber and the second chamber when the first and the second input forces are applied, and may include a second orifice that passes through the second piston. And the open valve pressure characteristics of the pressure side and the extension side first valves may be set weaker than that of the pressure side and the extension side second valves. And the cross section of the first orifice may be smaller than that of the second orifice.

By making above configuration, at the initial stage in the compression action of the shock absorber, the second chamber is expanded by the entering action of the first and the second pistons to the cylinder tube, and its hydraulic pressure decreases. In order to make up the shortage in oil in this second chamber, generally same amount of oil flows from the first chamber and intermediate chamber through the first orifice in the first piston and the second orifice in the second piston toward the second chamber. Therefore the hydraulic pressure in the intermediate chamber decreases in relation to the hydraulic pressure in the first chamber, also, the hydraulic pressure in the second chamber decreases in relation to the hydraulic pressure in the intermediate chamber.

Here, as described above, the cross section of the first orifice in the pressure side first damping force generating device of the first piston is smaller than that of the second orifice in the pressure side second damping force generating device of the second piston. Therefore, the first hydraulic pressure difference caused by the first orifice is greater than that of the second hydraulic pressure difference caused by the second orifice.

That is, at the initial stage in the compression action of the shock absorber, when the moving speed is slow, among the pressure side first and second damping force generating devices, the pressure side first damping force generating device generates the damping force dominantly, the damping force of this pressure side first damping force generating device becomes greater than that of the pressure side second damping force generating device.

Then, this first valve opens, when the moving speed in the compression action increases more, and when the first hydraulic pressure between the hydraulic pressure in the first chamber and the hydraulic pressure in the intermediate chamber reaches the open valve pressure of the first valve of the pressure side first damping force generating device. Then, the oil in the first chamber flows through the first valve in addition to the first orifice toward the intermediate chamber. Therefore, the increase gradient of the damping force according to this pressure side first damping force generating device is restrained to be small.

As described above, when the flow amount of the oil flowing the first orifice and the first valve in the pressure side first damping force generating device increases according to an increase in the moving speed, a flow resistance (pressure loss) increases because the oil flows in the second orifice in the pressure side second damping force generating device. Therefore the damping force of this pressure side second damping force generating device increases.

This second valve opens, when the moving speed in the compression action increases further, and a flow amount in the second orifice of the pressure side second damping force generating device increases, and its flow resistance increases, and when the second hydraulic pressure difference between the hydraulic pressure in the intermediate chamber and the hydraulic pressure in the second chamber reaches the open valve pressure of the second valve of the pressure side second damping force generating device. Then, the oil in the intermediate chamber flows the second valve in addition to the second orifice toward the second chamber, therefore, the increase gradient of the damping force according to this pressure side second damping force generating device is restrained to be small.

When the moving speed in the compression action increases, the damping force of the pressure side second damping force generating device becomes greater than the pressure side first damping force generating device, and this pressure side second damping force generating device generates the damping force dominantly.

On the other hand, at the initial stage in the extension action of the shock absorber, the second chamber is compressed by the exit action of the first and the second pistons from the cylinder tube, and its hydraulic pressure increases. In order to evacuate excessive oil in this second chamber, generally same amount of oil flows from the second chamber through each of the first orifice in the first piston and the second orifice in the second piston toward the first chamber and the intermediate chamber. Therefore, the hydraulic pressure in the intermediate chamber increases in relation to the hydraulic pressure in the first chamber, also, the hydraulic pressure in the second chamber increases in relation to the hydraulic pressure in the intermediate chamber.

Here, as described above, the cross section of the first orifice in the extension side first damping force generating device of the first piston is smaller than that of the second orifice in the extension side second damping force generating device of the second piston. Therefore, the first hydraulic pressure difference caused by the first orifice is greater than the second hydraulic pressure difference caused by the second orifice.

That is, at the initial stage in the extension action of the shock absorber, when the moving speed is slow, among the extension side first and second damping force generating devices, the extension side first damping force generating device generates the damping force dominantly, the damping force of this extension side first damping force generating device becomes greater than that of the extension side second damping force generating device.

Then, this first valve opens, when the moving speed in the extension action increases more, and when the first hydraulic pressure difference between the hydraulic pressure in the first chamber and the hydraulic pressure in the intermediate chamber reaches the open valve pressure of the first valve of the extension side first damping force generating device. Then, the oil in the intermediate chamber flows through the first valve in addition to the first orifice toward the first chamber. Therefore, the increase gradient of the damping force according to this extension side first damping force generating device is restrained to be small.

As described above, when the flow amount of the oil flowing the first orifice and the first valve in the extension side first damping force generating device increases according to an increase in the moving speed, a flow resistance increases because the oil flows in the second orifice in the extension side second damping force generating device. Therefore the damping force of this pressure side second damping force generating device increases.

This second valve opens, when the moving speed in the extension action increases further, and a flow amount in the second orifice of the extension side second damping force generating device increases, and its flow resistance increases, and when the second hydraulic pressure difference between the hydraulic pressure in the intermediate chamber and the hydraulic pressure in the second chamber reaches the open valve pressure of the second valve of the extension side second damping force generating device. Then, the oil in the second chamber flows the second valve in addition to the second orifice toward the intermediate chamber, therefore, the increase gradient of the damping force according to this extension side second damping force generating device is restrained to be small.

When the moving speed in the extension action increases, the damping force of the extension side second damping force generating device becomes greater than the extension side first damping force generating device, and this extension side second damping force generating device generates the damping force dominantly.

That is, the pressure side and the extension side first and second damping force generating devices are configured by the first and the second valves and the first and the second orifices, and the respective "action effect" is achieved according to this practical configuration. The configurations of the first and the second valves and first and second orifices are simple, so the respective "action effect" is achieved by simple configuration.

In above-mentioned invention, a cross section of the second orifice may be set one-and-half to ten times larger than a cross section of the first orifice.

Here, if the cross section of the second orifice is less than one-and-half times of the cross section of the first orifice, the value of each cross section of the first and the second orifices shift close to each other. Therefore, when the shock absorber performs compression action or extension action by application of the first and the second input forces, at the initial stage in these respective actions, the oil flows in the pressure side first and second damping force generating devices, or in the extension side first and second damping force generating devices generally at the same time and in same condition, and the shock absorber tends to generate the generally same damping force. Therefore, it is difficult for the pressure side and the extension side first damping force generation devices to generate the damping force dominantly, at the initial stage in the respective action, so the "action effect" is difficult to obtain.

On the other hand, if the cross section of the second orifice is more than ten times of the cross section of the first orifice, the cross section of the second orifice becomes oversized. Then, the expected damping force is difficult to obtain even if the oil flows in the second orifice 44. Therefore, it is difficult to obtain the expected damping force especially when the moving speed is fast.

For above reasons, the diameters of the cross section of the first and the second orifices are preferably defined between one-and-half to ten times.

In above-mentioned invention, kinetic viscosity of the oil may be set four to ten centistokes (cSt) at 40°C.

Accordingly, here, when the shock absorber is repeatedly used, the temperature of the oil rises, then the kinetic viscosity tends to decrease. In general, the decrease width of the kinetic viscosity according to temperature is wider when the kinetic viscosity of the oil is higher.

In general, kinetic viscosity of the oil is approximately fifteen cSt at 40°C, however, when this type of oil is used, the decrease width of the kinetic viscosity according to the temperature rise becomes larger, and it becomes difficult to obtain the expected damping force precisely. Also, wider sections are influenced by the effect (resistance) of the viscosity of the oil in the shock absorber that uses a plurality of pistons as in the present invention. Thus, for decreasing the influence as much as possible, it is beneficial to use it with low viscosity oil that has less than ten cSt viscosities for example.

On the other hand, when the viscosity of the oil is less than four, the consumption increases and the durability lowers according to decrease in lubrication in the oil, because the viscosity of the oil is too low.

For this reason, as described above, kinetic viscosity of the oil is defined between four to ten cSt at 40°C.

In addition to the above-mentioned invention, a regulation device that can change a value of the cross section of the second orifice may be disposed.

Accordingly, by controlling the regulation device, between middle and high-speed range of the moving speed, a desired characteristic can be obtained by variously changing the damping force characteristic of the second orifice.

In above-mentioned invention, an outer diameter of a part of the piston rod connected to the first piston may be set smaller than an outer diameter of other part of the piston rod connected to the second piston.

Accordingly, since the outer diameter of a part of the piston rod is made smaller than the outer diameter of other parts of the piston rod, the effective area at the end surface in the axial direction of the first piston excluding the through section of the piston rod can be bigger than that of the second piston.

Therefore, the pressure side and the extension side first damping force generating devices can be designed more freely, such that the effective area of the leaf valve body of for example a first valve of the pressure side and the extension side first damping force generating devices attached to the first piston can be set larger. As a result, when the moving speed is extremely slow, a tiny value of the damping force generated by the oil flow in the first valve of the pressure side and the extension side first damping force generating devices can be obtained precisely, and the "action effect" is improved.

### Brief Description of Drawings

FIG. 1 is a vertical sectional view of a shock absorber showing the embodiment 1.
FIG. 2 is a partially enlarged view of FIG. 1 showing the embodiment 1.
FIG. 3 is a graph showing the relationship between the moving speed of a piston rod and the damping force (damping force characteristic).
FIG. 4 is a counterpart of FIG. 1 showing the embodiment 2.
FIG. 5 is a counterpart of FIG. 1 showing the embodiment 3.
FIG. 6 is a counterpart of FIG. 2 showing the embodiment 4.
FIG. 7 is a counterpart of FIG. 2 showing the embodiment 5.
FIG. 8 is a counterpart of FIG. 1 showing the embodiment 6.

### Description of Reference Numerals and Symbols

- 1: shock absorber
- 2: vehicle
- 3: vehicle body side
- 4: vehicle wheel side
- 7: shaft center
- 8: cylinder tube
- 10: one end
- 12: another end
- 17: first piston
- 18: second piston
- 19: first chamber
- 20: intermediate chamber
- 21: second chamber
- 22: one end side
- 23: piston rod
- 31: oil
- 34: pressure side first damping force generating device
- 35: pressure side second damping force generating device
- 36: first valve
- 39: first orifice
- 41: second valve
- 44: second orifice
- 46: extension side first damping force generating device
- 47: extension side second damping force generating device
- 50: intermediate unit
- 53: free piston
- 54: oil storage chamber
- 55: tube
- 56: gas enclosure chamber
- 62: regulation device
- 73: narrow section
- 74: passage
- 75: valve
- A: first input force
- A': second input force
- B: compression action
- C: extension action
- D1, D2: outer diameter
- PI, PN, P2: hydraulic pressure
- V: moving speed

### Best Mode for Carrying Out the Invention

To achieve the object of the hydraulic shock absorber in the present invention are: In a case that the shock absorber performs compression or extension actions by application of the first and the second input forces from outside, as in the initial stage of the action, when the moving speed of the piston rod in relation to the cylinder tube is slow, the "response" is restrained to be low, while, when the first and the second input forces are large, and the moving speed is fast, the "response" is set high; By equipping this shock absorber to a vehicle, the driving feel on the vehicle becomes softer, and at the same time, when the large first and second input forces are applied, by absorbing the impact without delay, the driving feel on the vehicle is further improved, and also the driving stability is improved, the best mode for carrying out the present invention is as follows.

That is, the shock absorber includes: a first and a second pistons, which are inserted in the cylinder tube slidably in the axial direction, and divide the inside of the cylinder tube to first chamber, intermediate chamber, and second chamber, from one end to another end in this order; a piston rod in which one end is connected to the first and the second pistons, and another end is protruded from another end of the cylinder tube to outside of the cylinder tube; a pressure side first damping force generating device for absorbing the first input force by flowing the oil from the first chamber through the first piston toward the intermediate chamber, when the first input force is applied from outside to enter the piston into the cylinder tube; and a pressure side second damping force generating device for absorbing the first input force, by flowing the oil from the intermediate chamber through the second piston toward the second chamber, when the first input force is applied.

The shock absorber also includes: an extension side first damping force generating device for absorbing the second input force, by flowing the oil from the intermediate chamber through the first piston to the first chamber, when the second input force is applied from outside to evacuate the piston rod from the cylinder tube; and an extension side second damping force generating device for absorbing the second input force by flowing oil from the second chamber through the second piston to the intermediate chamber, when the second input force is applied.

When the moving speed of the piston rod in relation to the cylinder tube is slow, the damping forces of the pressure side and the extension side first damping force generating devices are set greater than that of the pressure side and the extension side second damping force generating devices, while, when the moving speed is fast, the damping forces of the pressure side and the extension side second damping force generating devices are greater than that of the pressure side and the extension side first damping force generating devices, and the gas enclosure chamber filled with gas is connected to the first chamber through a free piston.

### Embodiment 1

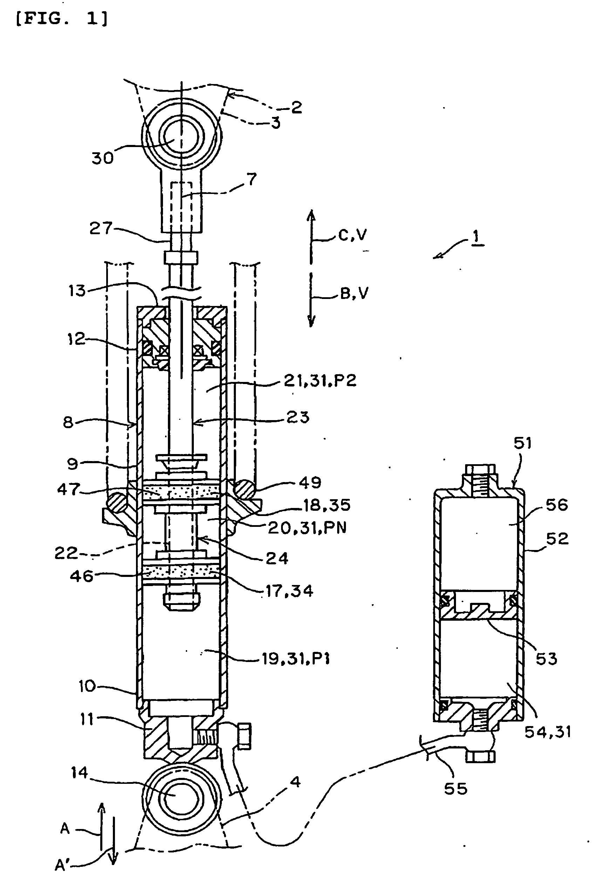

The details of the present invention will now be described in accordance with the first embodiment with reference to FIGs. 1 to 3 of the accompanying drawings.

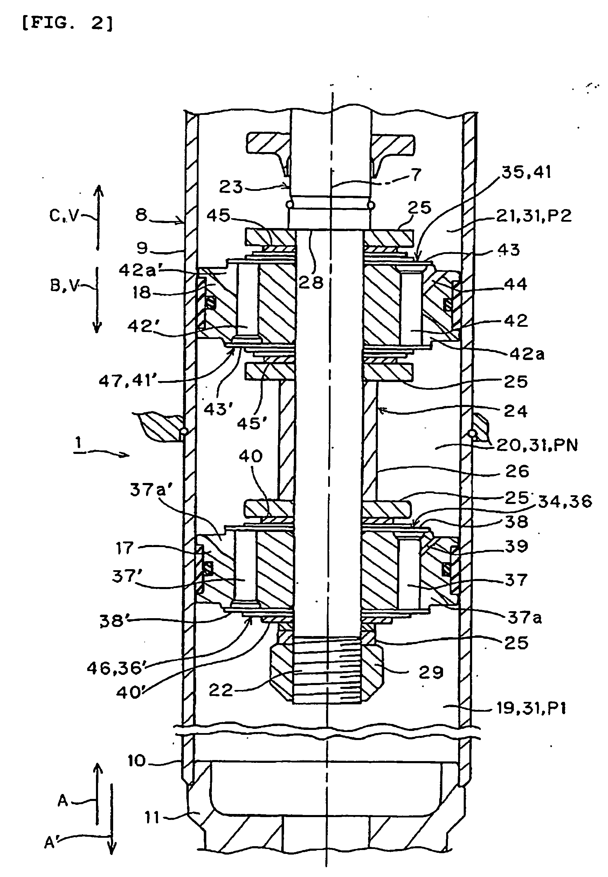

The reference numeral 1 is a hydraulic shock absorber in FIGs.1 and 2. This hydraulic shock absorber is applied in the suspension devices for automobile or motorcycle that is represented by vehicle 2. The hydraulic shock absorber is constructed between the vehicle body side 3 of the vehicle 2 and the vehicle wheel side 4 suspended to the vehicle body side 3.

The hydraulic shock absorber 1 includes a single cylinder type cylinder tube 8 that has a shaft center toward the longitudinal direction. This cylinder tube 8 includes a tube body 9 located above the shaft center 7, a cap 11 for closing the opening of the lower end of the tube body 9 which is one end 10 of the cylinder tube 8, and a head cover 13 for closing the opening of the upper end of the tube body 9 which is another end 12 of the cylinder tube 8. The one end 10 of the cylinder tube 8 is pivot supported by a pivot shaft 14 in relation to the respective vehicle wheel side 4.

A plurality of first and second pistons 17, 18 are inserted to the cylinder tube 8 so that they can slide in the axial direction. The first piston 17 is disposed at the one end 10 side of the cylinder tube 8, and the second piston 18 is disposed at another end 12 side of the cylinder tube 8. The first and the second pistons 17, 18 divide the inside of the cylinder tube 8 into first chamber 19, intermediate chamber 20, and second chamber 21 in the respective order from one end 10 side to another end 12 side.

A piston rod 23 is located above the shaft center 7. One end side 22 of the piston rod 23 is connected to the first and the second pistons 17, 18, and another end side is protruded externally from the cylinder tube 8. The one end side 22 of the piston rod 23 passes through the center of the first and the second pistons 17, 18. The first and the second pistons 17, 18 are connected to the one end side 22 of the piston rod 23 by a coupling tool 24.

The coupling tool 24 includes: a washer 25 that is fitted onto the piston rod 23 to sandwich the first and the second pistons 17, 18; a spacer 26 that is fitted on to the piston rod 23 and disposed between the first and the second pistons 17, 18; and a fastener 29 that fastens the first and the second pistons 17, 18, washer 25, and spacer 26 as one unit in relation to a step-difference-surface 28 formed between the one end side 22 and another end side 27 of the piston rod 23. An edge of another end side 27 of the piston rod 23 is pivot supported by the pivot shaft 30 in relation to the vehicle body side 3. Inside of the cylinder tube 8 is filled with hydraulic fluid that is oil 31. The kinetic viscosity of the oil 31 is supposed to be four to ten centistokes (cSt) at the temperature 40°C.

When first input force A is applied from outside to the shock absorber 1 to enter the piston rod 23 into the cylinder tube 8, in other words when the shock absorber is in compression action B, a pressure side damping force generating device 34 absorbs the first input force A by flowing the oil 31 from the first chamber 19 through the piston 17 toward the intermediate chamber 20. When the first input force A is applied to set the shock absorber 1 in the compression action B, a pressure side second damping force generating device 35 absorbs the first input force A by flowing the oil 31 from the intermediate chamber 20 through the second piston 18 toward the second chamber 21.

The pressure side first damping force generating device 34 includes a pressure side first valve 36. A plurality of valve holes 37 that pass through the first piston 17 are formed on the first piston 17 in the circumferential direction at the certain spacing. These valve holes 37 communicate the first chamber 19 and the intermediate chamber 20, respectively. The first valve 36 includes a pressure side leaf valve body 38 that can open and close and resiliently close the exit side of the valve hole 37. A notch 37a is formed on the entrance side of the valve hole 37. The leaf valve body 38 is constituted with a plurality (two pieces) of disc form leaf that has different diameters with one another. The leaf valve body 38 is supported to the piston rod 23 between the first piston 17 and the washer 25 of the coupling tool 24 through a leaf sheet 40.

When the first input force A is applied to the shock absorber 1 then the shock absorber 1 performs the compression action B, the leaf valve body 38 is opened by a first hydraulic pressure difference (P1-PN) between a hydraulic pressure P1 in the first chamber 19 and a hydraulic pressure PN of the intermediate chamber 20. Then the oil 31 flows from the first chamber 19 through the notch 37a and the valve hole 37 toward the intermediate chamber 20. The pressure side first damping force generating device 34 includes the first orifice 39 with circular sections formed in the first piston 17. The first orifice 39 communicates the first chamber 19 and the intermediate chamber 20 through the valve hole 37 in the first piston 17.

The pressure side second damping force generating device 35 includes a pressure side second valve 41. Pluralities of valve holes 42 that pass through the second piston 18 are formed in the second piston 18 in the circumferential direction at certain spacing. These valve holes 42 communicate the intermediate chamber 20 and the second chamber 21 to each other. The second valve 41 includes a pressure side leaf valve body 43 that can open, close and resiliently close the exit side of the valve hole 42. A notch 42a is formed at the entrance side of the valve hole 42. The leaf valve body 43 is made of the plurality of disc form leaf springs, each has different dimension, piled together. The leaf valve body 43 is disposed between the second piston 18 and the washer 25 of the fastener 24 through the leaf sheet 45, and supported to the piston rod 23. The first valve 36 includes a pressure side leaf valve body 38 that can open and close, and resiliently close the exit side of the valve hole 37. A notch 37a is formed on the entrance side of the valve hole 37. The leaf valve body 38 is constituted with a plurality (two pieces) of disc form leaf that has different dimension with one another piled together. The leaf valve body 38 is disposed between the first piston 17 and the washer 25 of the fastener 24, and supported to the piston rod 23.

When the first input force A is applied and the shock absorber 1 performs the compression action B, the leaf valve body 43 is opened by second hydraulic pressure difference (PN-P2) between hydraulic pressure PN in the intermediate chamber 20 and hydraulic pressure P2 of the second chamber 21. Then the oil 31 flows from the intermediate chamber 20 through the notch 42a and the valve hole 42 toward the second chamber 21. The pressure side second damping force generating device 35 includes the second orifice 44 with circular sections formed in the second piston 18. The second orifice 44 communicates the intermediate chamber 20 and the second chamber 21 through the valve hole 42 in the second piston 18.

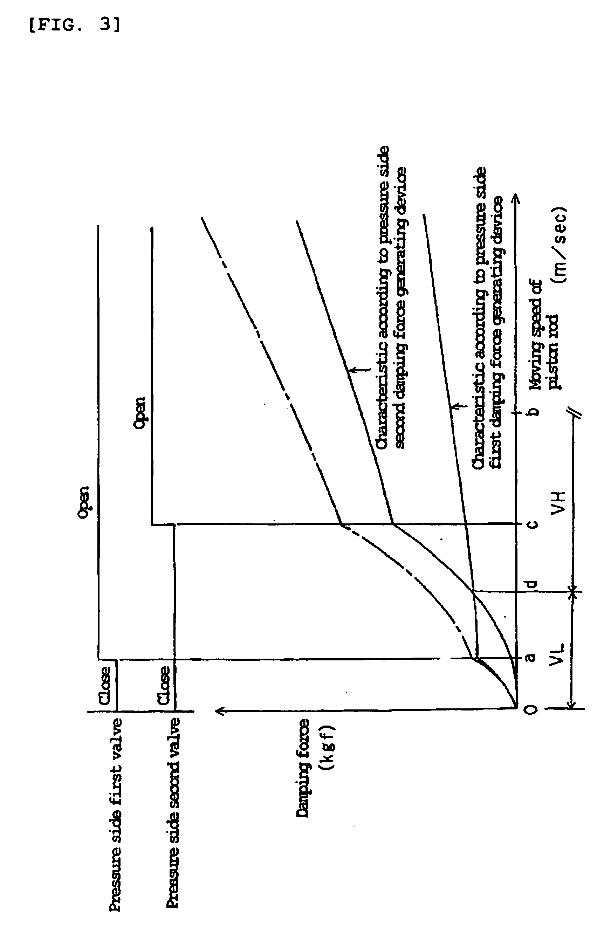

In FIG. 3, if the moving speed V of the piston rod 23 into the cylinder tube 8 is slow (VL in FIG. 3) when the shock absorber 1 is in the compression action B, the damping force of the pressure side first damping force generating device 34 is supposed to be larger than that of the pressure side second damping force generating device 35. On the other hand, if the moving speed V is fast (VH in FIG. 3), the damping force of the pressure side second damping force generating device 35 is defined to be larger than that of the pressure side first damping force generating device 34.

As a concrete constitution to achieve this, a valve opening pressure characteristic of the first valve 36 is set weaker than that of the second valve 41. In other words, a value of the first hydraulic pressure difference (P1-PN) for initiating the valve opening of the first valve 36 of the first piston 17 is smaller than a value of the second hydraulic pressure difference (PN-P2) for initiating the valve opening of the second valve 41 of the second piston 18. A cross section of the orifice 39 is smaller than the cross section of the second orifice 44. In this case, the cross section of the second orifice 44 is one-and-half times to ten times larger than the cross section of the first orifice 39. An each cross section of the first and the second orifices 39, 44 cannot to be adjusted, but fixed to a certain value.

On the other hand, when the second input force A' is applied to the opposite direction of the first input force A then the piston rod 23 exits from the cylinder tube 8, in other words, when the shock absorber 1 performs the extension action C, an extension side first damping force generating device 46 absorbs the second input force A' by flowing the oil 31 from the intermediate chamber 20 through the first piston 17 to the first chamber 19. The extension side first damping force generating device 46 includes an extension side first valve 36' , valve hole 37' , notch 37a' , leaf valve body 38', and leaf sheet 40', that are generally same as the pressure side first damping force generating device 34 in the constitution, shape, and action. The first orifice 39 and a part of the valve hole 37 that communicates to this are commonly used in the extension side first damping force generating device 46.

When the second input force A' is applied then the shock absorber 1 performs the extension action C, the extension side second damping force generating device 47 absorbs the second input force A' by flowing the oil 31 from the second chamber 21 through the second piston 18 to the intermediate chamber 20. The extension side second damping force generating device 47 includes the extension side second valve 41', valve hole 42' , notch 42a' , leaf valve body 43', and leaf sheet 45' , that are generally same as the pressure side second damping force generating device 35 in the constitution, shape, and action. The second orifice 44 and a part of the valve hole 42 that communicates to this are commonly used in the extension side second damping force generating device 47.

In above case, the notch 37a of the pressure side first damping force generating device 34 is not formed around the leaf valve body 38' of the extension side first damping force generating device 46. The notch 37a communicates the valve hole 37 to the first chamber 19. The notch 37a' of the extension side first damping force generating device 46 is not formed around the leaf valve body 38 of the pressure side first damping force generating device 34. The notch 37a communicates the valve hole 37 to the intermediate chamber 20. On the other hand, notch 42a of the pressure side second damping force generating device 35 is not formed around the leaf valve body 43' of the extension side second damping force generating device 47. The notch 42a communicates the valve hole 42 to the intermediate chamber 20. The notch 42a' of the extension side second damping force generating device 47 is not formed around the leaf valve body 43 of the pressure side second damping force generating device 35. The notch 42a' communicates the valve hole 42' to the second chamber 21. In the respective figures the leaf valve body is shown by the cross section, however hatching is not applied for a convenience object.

A spring 49 for applying force in order to extension the shock absorber 1 is constructed between the vehicle body side 3 and the cylinder tube 8. The applying force of the spring 49 is equivalent to the second input force A'.

An accumulator 51 is disposed to constantly pressurize the first chamber 19, intermediate chamber 20, and the oil 31 in the second chamber 21. The accumulator 51 is disposed as a separate unit from the cylinder tube 8. The accumulator 51 includes: another cylinder tube 52 supported to the vehicle body side 3; a free piston 53 inserted in the cylinder tube 52 slidably in the axial direction; and a tube 55 for communicating an oil storage chamber 54 to the first chamber 19. The oil storage chamber 54 is one of two chambers in the cylinder tube 52 that is divided by the free piston 53. The oil storage chamber 54 is filled with the oil 31. A gas enclosure chamber 56 that is the other chamber in the cylinder tube 42 is filled with a high-pressure nitrogen gas. The nitrogen gas is compressible, and it's in the compressed form in this case. In other words, the gas enclosure chamber 56 is in communication with the first chamber 19 through the free piston 53.

During the vehicle 2 is driving, the shock absorber 1 performs the compression action B when the first input force A is applied from outside from the driving road through the vehicle wheel side 4. At this time, at first, the oil 31 in the first chamber 19 is flown from the first chamber 19 through the pressure side first damping force generating device 34 in the first piston 17 toward the intermediate chamber 20. Furthermore, the oil 31 in the intermediate chamber 20 is flown from the intermediate chamber 20 through the pressure side second damping force generating device 35 in the second piston 18 toward the second chamber 21. The pressure side first and second damping force generating devices 34, 35 attempt to generate the damping force coordinately by respectively flowing the oil 31.

In above case, at the initial stage in the compression action B by the shock absorber 1, the first chamber 19 is compressed by the entering action of the first and the second pistons 17, 18, and the piston rod 23 into the cylinder tube 8, and its hydraulic pressure in the first chamber 19 tries to rise.

However, as described above, the gas enclosure chamber 56 filled with gas is connected to the first chamber 19 through the free piston 53. Thus, when the first chamber 19 is compressed and its hydraulic pressure P1 is beginning to rise, the hydraulic pressure in the first chamber 19 is restrained from rising by the motion of the free piston 53 and the compression of the gas in the gas enclosure chamber 56. Therefore, the oil 31 is prevented from immediately flowing in the pressure side first damping force generating device 34 from the first chamber 19 toward the intermediate chamber 20 and the second chamber 21 by the hydraulic pressure P1 in the first chamber 19.

At the initial stage in the compression action B of the shock absorber 1, the second chamber 21 is expanded by the entering action of the first and the second pistons 17, 18 into the cylinder tube 8, then its hydraulic pressure P2 is decreased. In order to make up the shortage of the oil 31 in this second chamber 21, the generally same amount of oil 31 flows from the first chamber 19 and intermediate chamber 20 through the first orifice 39 in the first piston 17 and the second orifice 44 in the second piston 18 toward the second chamber 21. Thus the hydraulic pressure PN in the intermediate chamber 20 decreases in relation to the hydraulic pressure P1 in the first chamber 19. At the same time, the hydraulic pressure PN decreases in relation to the hydraulic pressure PN in the intermediate chamber 20.

Furthermore, as described above, the cross section of the first orifice 39 in the pressure side first damping force generating device 34 in the first piston 17 is smaller than that of the second orifice 44 in the pressure side second damping force generating device 35 in the second piston 18. Therefore, the first hydraulic pressure difference (P1-PN) caused by the first orifice 39 is larger than the second hydraulic pressure difference (PN-P2) caused by the second orifice 44.

That is, when the shock absorber 1 is in the initial stage of the compression action B, and when the moving speed V is slow (O-a in FIG. 3), the pressure side first damping force generating device 34 between the pressure side first and second damping force generating devices 34, 35, generates the damping force dominantly, then the damping force in this pressure side first damping force generating device 34 becomes larger than that of the pressure side second damping force generating device 35.

When the shock absorber 1 is in the compression action B, the capacity of the cylinder tube 8 decreases for an amount of the piston rod 23 entered to the cylinder tube 8. Accordingly, the amount of oil equivalent to the decreased capacity is flown from the first chamber 19 through the tube 55 into the oil storage chamber 54, by the motion of the free piston 53 in the accumulator 51 and the compression of the gas in the gas enclosure chamber 56. Therefore the compression action B of the shock absorber 1 is performed smoothly.

If the moving speed V at the compression action B increases further and the first hydraulic pressure difference (P1-PN) between the hydraulic pressure P1 in the first chamber 19 and the hydraulic pressure PN in the intermediate chamber 20 reach the open valve pressure, this first valve 36 opens ("a" in FIG. 3). The oil 31 in the first chamber 19 flows through the first valve 36 in addition to the first orifice 39 toward the intermediate chamber 20. Thus, the increase gradient of the damping force according to this pressure side first damping force generating device 34 is lowered ("a-b" in FIG. 3). The opening of the first valve 36 becomes larger when the first hydraulic pressure difference (P1-PN) is larger.

As described above, when the flow amount of the oil 31 flowing the first orifice 39 and the first valve 36 in the pressure side first damping force generating device 34 is increased according to an increase in the moving speed V, a flow resistance increases because the oil 31 flows in the second orifice 44 in the pressure side second damping force generating device 35. Therefore the damping force of this pressure side second damping force generating device 35 increases ("a-c" in FIG. 3).

As the moving speed V in the compression action B increases ("d" in FIG. 3), the damping force of the pressure side second damping force generating device 35 crosses the value once same as the damping force of the pressure side first damping force generating device 34. While the moving speed V is slow like until the crossing point (0-d=VL in FIG. 3), the damping force of the pressure side first damping force generating device 34 is larger than that of the pressure side second damping force generating device 35. However, when the moving speed V is faster ("d-b" in FIG. 3) like after the crossing point, the damping force of the pressure side second damping force 35 becomes larger than that of the pressure side first damping force generating device 34.

The second valve 41 opens ("c" in FIG. 3), when the moving speed V in the compression action B further increases, and the flow amount in the second orifice 44 in the pressure side second damping force generating device 35 increases, and the flow resistance increases, and the second hydraulic pressure difference (PN-P2) between the hydraulic pressure PN of the intermediate chamber 20 and the hydraulic pressure P2 of the second chamber 21 reach the open valve pressure of the second valve 41 of the pressure side second damping force generating device 35. The oil 31 in the intermediate chamber 20 flows through the second valve 41 in addition to the second orifice 44 toward the second chamber 21. Thus, the increase gradient of the damping force by this pressure side second damping force generating device 35 is lowered ("c-b" in FIG. 3) . The opening of the second valve 41 becomes larger as the second hydraulic pressure difference (PN-P2) grows larger.

A sum of each damping force of the pressure side first damping force generating device 34 and the pressure side second damping force generating device 35 at each point of the moving speed V in the compression action B is defined as the pressure side damping force characteristic (dashed line in FIG. 3) of the shock absorber 1.

Here, as described above, while the moving speed V of the piston rod 23 in relation to the cylinder tube 8 is slow (VL in FIG. 3) as in the initial stage of the compression action B of the shock absorber 1, the pressure side first damping force generating device 34 among the pressure side first and second damping force generating devices 34, 35 generates the damping force dominantly, while the pressure side second damping force generating device 35 barely generates the damping force. Therefore, the intermediate chamber 20 and the second chamber 21 in the back of the moving direction of the first and the second pistons 17, 18 that move with the piston rod 23 decrease their hydraulic pressure PN, P2 concurrently. The decreasing pressure in each chamber is generally same. Thus, the intermediate chamber 20 and the second chamber 21 functions like a single unit.

In above case, the capacity of the intermediate chamber 20 and the second chamber 21 together is larger than the capacity of each single chamber. Then the volume change amount by the "bulk modulus" of the oil 31 in the intermediate chamber 20 and the second chamber 21 is maintained large (soft). Therefore, the decrease speed of the hydraulic pressure PN, P2 is kept small. Therefore, immediate flow of the oil 31 in the pressure side first damping force generating device 34 from the first chamber 19 through the pressure side first damping force generating device 34 toward the intermediate 20 and the second chamber 21 are prevented. That is, the "response" is kept low at the initial stage in the compression action B of the shock absorber 1, and the sudden regulation of the piston rod 23 entering into the cylinder tube 8 is prevented.

As a result, if the shock absorber 1 is equipped to the vehicle 2, a vehicle 2 provides a soft impression to a driver at the initial stage in the compression action B of the shock absorber 1 when the first input force A is applied from the ground. Therefore, an action effect, which is an achievement to an improved driving feel of the vehicle 2, is produced.

When the moving speed V in the compression action B increases, the damping force of the pressure side second damping force generating device 35 becomes larger than the that of the pressure side first damping force generating device 34, then the pressure side second damping force generating device 35 generates the damping force dominantly. Therefore, the second chamber 21 at the back in the moving direction of the second piston 18 becomes larger, and its hydraulic pressure P2 decreases.

Here, the capacity of the second chamber 21 alone is small. So the volume change amount by the "bulk module" of the oil 31 in this second chamber 21 is small (hard). Therefore, according to the entering action of the second piston 18, the decrease speed of the hydraulic pressure P2 of the second chamber 21 becomes faster, then the "response" in the pressure side second damping force generating device 35 becomes higher.

As a result, if the shock absorber 1 is equipped to the vehicle 2, the impact energy based on the impact force applied to the vehicle 2 is immediately absorbed by the pressure side second damping force generating device 35, when the moving speed V is fast at the compression action B of the shock absorber 1 compressed by the first input force A applied from the ground, during the vehicle 2 is driving. Therefore, another "action effect", which is an achievement to an improved driving stability of the vehicle 2, is also produced.

When the compression action B of the shock absorber 1 progresses, the applying force of the spring 49 increases as much. When the first input force A is equivalent to the applying force of the spring 49, the compression action B of the shock absorber 1 finishes. Then, the applying force of the spring 49, that is, the second input force A' makes the shock absorber 1 perform an extension action C to return to its original length.

As described above, when the shock absorber1 is applied with second input force A' that is an applying force of the spring 49 and performs the extension action C, the oil 31 in the second chamber 21 flows from the second chamber 21 through the extension side second damping force generating device 47 in the second piston 18 toward the intermediate chamber 20. Also, the oil 31 in the intermediate chamber 20 flows from the intermediate chamber 20 through the extension side first damping force generating device 46 in the first piston 17 toward the first chamber 19. In this way the extension side first and second damping force generating devices 46, 47 try to generate the damping force coordinately by flowing the oil 31 in these respectively.

In above case, at the initial stage in the extension action C of the shock absorber 1, the first chamber 19 is expanded by the exit action of the first and the second pistons 17, 18, and the piston rod 23 from the cylinder tube 8, and the hydraulic pressure P1 in the first chamber 19 tries to decrease.

However, as described above, the gas enclosure chamber 56 filled with gas is connected to the first chamber 19 through the free piston 53. Thus, when the first chamber 19 expands and its hydraulic pressure P1 begins to decrease, the hydraulic pressure P1 in the first chamber 19 is restrained from decreasing by the motion of the free piston 53 and the expansion of the gas in the gas enclosure chamber 56. Therefore, the oil 31 is prevented from immediately flowing from the intermediate chamber 20 and the second chamber 21 through the extension side first damping force generating device 46 toward the first chamber 19 by the hydraulic pressure P1 in the first chamber 19.

At the initiation of the extension action C of the shock absorber 1, the second chamber 21 is compressed by the exit action of the first and the second pistons 17, 18 from the cylinder tube 8, and its hydraulic pressure P2 is increased. In order to discharge the excessive oil in the second chamber 21, generally same amount of oil flows from the second chamber 21 through the orifice 39 in the first piston 17 and through the second orifice 44 in the second piston 18 toward the first chamber 19 and the intermediate chamber 20. Thus the hydraulic pressure PN in the intermediate chamber 20 increases in relation to the hydraulic pressure P1 in the first chamber 19. At the same time, the hydraulic pressure P2 increases in relation to the hydraulic pressure PN in the intermediate chamber 20.

Furthermore, as described above, the cross section of the first orifice 39 in the extension side first damping force generating device 46 in the first piston 17 is smaller than that of the second orifice 44 in the extension side second damping force generating device 47 in the second piston 18. Therefore, the first hydraulic pressure difference (PN-P1) caused by the first orifice 39 is larger than the second hydraulic pressure difference (P2-PN) caused by the orifice 44.

Here, the action of the shock absorber 1 at the extension action C, in FIG. 3, is equivalent to the 180 degree reversed figure of FIG. 3 toward below, with a horizontal line as a reference, which indicates the damping force is zero. With reference to an imaginary reversed figure 3, the action of the shock absorber 1 at the extension action C is explained. Note that pressure side in the reversed FIG. 3 means extension side.

When the shock absorber 1 is in the initial stage of the extension action C, and when the moving speed V is slow (O-a in reversed FIG. 3), the extension side first damping force generating device 46 between the extension side first and second damping force generating devices 46, 47, generates the damping force dominantly, and the damping force in this extension side first damping force generating device 46 becomes larger than that of the extension side second damping force generating device 47.

When the shock absorber 1 is in the extension action C, the capacity of the cylinder tube 8 increases as much as the piston rod 23 enters to the cylinder tube 8. In this case, the amount of oil equivalent to the increased capacity is flown from the oil storage chamber 54 through the tube 55 into the first chamber 19, by the motion of the free piston 53 in the accumulator 51 and by the expansion of gas in the gas enclosure chamber 56. Therefore the extension action C of the shock absorber 1 is performed smoothly.

When the moving speed V at the extension action C increases and when the first hydraulic pressure difference (PN-P1) between the hydraulic pressure P1 in the first chamber 19 and the hydraulic pressure PN in the intermediate chamber 20 reach the open valve pressure of the first valve 36' in the extension side first damping force generating device 46, this first valve 36' opens ("a" in reversed FIG. 3) . The oil 31 in the intermediate chamber 20 flows through the valve 36' in addition to the first orifice 39 toward the first chamber 19. Thus, the increase gradient of the damping force by this extension side first damping force generating device 46 is lowered ("a-b" in reversed FIG. 3). The opening of the first valve 36' becomes larger as the first hydraulic pressure difference (PN-P1) is larger.

As described above, when the flow amount of the oil 31 flowing the first orifice 39 and the first valve 36' in the extension side first damping force generating device 46 is increased according to an increase in the moving speed V, a flow resistance increases because the oil 31 flows in the second orifice 44 in the extension side second damping force generating device 47. Therefore the damping force of this pressure side second damping force generating device 35 increases ("a-c" in reversed FIG. 3).

In the mid course, as the moving speed V in the extension action C increases ("d" in reversed FIG. 3), the damping force of the extension side second damping force generating device crosses the same value once as the damping force of the extension side first damping force generating device 46. While the moving speed V is slow like until the crossing point (0-d=VL in reversed FIG. 3), the damping force of the extension side first damping force generating device 46 is larger than that of the extension side second damping force generating device 47. However, when the moving speed V of the extension side second damping force generating device is faster ("d-b=VH" in reversed FIG. 3), the damping force of the extension side second damping force 47 becomes larger than that of the extension side first damping force generating device 46.

The second valve 41' opens ("c" in reversed FIG. 3), when the moving speed V in the extension action C is further increased, and the flow amount in the second orifice 44 in the extension side second damping force generating device 47 increases, and its flow resistance increases, and the second hydraulic pressure difference (P2-PN) between the hydraulic pressure PN of the intermediate chamber 20 and the hydraulic pressure P2 of the second chamber 21 reach the open valve pressure of the second valve 41' of the extension side second damping force generating device 47. The oil 31 in the second chamber 21 flows through the second valve 41' in addition to the second orifice 44 toward the intermediate chamber 20. Thus, the increase gradient of the damping force by this extension side second damping force generating device 47 is lowered ("c-b" in reversed FIG. 3). The opening of the second valve 41' becomes larger as the second hydraulic pressure difference (P2-PN) grows larger.

A sum of each damping force of the extension side first damping force generating device 46 and the extension side second damping force generating device 47 at each point of the moving speed V in the extension action C is defined as the extension side damping force characteristic (dashed line in reversed FIG. 3).

Here, as described above, when the moving speed V of the piston rod 23 in relation to the cylinder tube 8 is slow (VL in reversed FIG. 3), the damping force of the extension side first damping force generating device 46 is larger than that of the extension side second damping force generating device 47. Therefore, when the moving speed V is slow as in the initial stage in the extension action C of the shock absorber 1, the extension side first damping force generating device 46 among the extension side first and second damping force generating devices 46, 47 generates the damping force dominantly, and the extension side second damping force generating device 47 barely generates the damping force. Therefore, the first chamber 19 and the intermediate chamber 20, at the back of the moving direction of the first and the second pistons 17, 18 in communication to the piston rod 23, decrease their hydraulic pressure PI, PN. The pressure decrease in these is generally same, so the first chamber 19 and the intermediate chamber 20 function like a united single chamber.

In above case, the capacity of the first chamber 19 and the intermediate chamber 20 together is larger than the capacity of each single chamber. Then the volume change amount by the "bulk modulus" of the oil 31 in the first chamber 19 and the intermediate chamber 20 is maintained large (soft) . Therefore, the increase speed of the hydraulic pressure PN, P2 in the intermediate chamber 20 and the second chamber 21 is kept small. Therefore, immediate flow of the oil 31 from the intermediate chamber 20 and the second chamber 21 through the extension side first damping force generating device 46 toward the first chamber 19 is prevented. That is, the "response" is kept low at the initial stage of the extension action C of the shock absorber 1, and the sudden regulation of the piston rod 23 exiting from the cylinder tube 8 is prevented.

As a result, if the shock absorber 1 is equipped to the vehicle 2, it provides a soft impression to a driver at the initial stage in the extension action C of the shock absorber 1 when the second input force A' is applied from the spring 49. Therefore, an action effect, which is an achievement to an improved driving feel of the vehicle 2, is more securely produced.

When the moving speed V in the extension action C increases, the damping force of the extension side second damping force generating device 47 becomes larger than the extension side first damping force generating device 46, then the extension side second damping force generating device 47 generates the damping force dominantly. Therefore, the second chamber 21 at the front in the moving direction of the second piston 18 becomes smaller, and its hydraulic pressure P2 increases.

Here, the capacity of the second chamber 21 alone is small. So the volume change amount by the "bulk module" of the oil 31 in this second chamber 21 is small (hard). Therefore, according to the exit action of the second piston 18, the increase speed of the hydraulic pressure P2 in the second chamber 21 becomes faster, then the "response" in the extension side second damping force generating device 47 becomes higher.

As a result, if the shock absorber 1 is equipped to the vehicle 2, the impact energy based on the second input force A' is immediately absorbed by the extension side second damping force generating device 47, when the moving speed V is fast at the extension action C of the shock absorber 1 by the second input force A' applied from the spring 49, during the vehicle 2 is driving. Therefore, another "action effect", which is an achievement to an improved driving stability of the vehicle 2, is more securely produced.

Hereafter, the compression action B and the extension action C are repeated by turns, so that the respective first and second input forces A, A' is absorbed, and the smooth progress of the vehicle 2 is maintained.

As described above, the cross section of the second orifice 44 is one-and-half to ten times larger than the cross section of the first orifice 39.

Here, if the cross section of the second orifice 44 is less than one-and-half times of the cross section of the first orifice 39, each cross sectional value of the first and the second orifices 39, 44 come closer to one another. Therefore, if the shock absorber 1 is in the compression action C or extension action C after applied with the first and the second input forces A, A' , the oil 31 flows in the pressure side first and second damping force generating devices 34, 35, or in the extension side first and second damping force generating devices 46, 47, at the generally same time, under the generally same condition, from the initial stage of the respective actions B, C, and then tend to generate the generally same damping force. Therefore, it is difficult for the pressure side first damping force generating device 34 to generate the damping force dominantly at the initial stage of the respective actions B, C, and the "action effect" is hard to obtain.

On the other hand, if the cross section of the second orifice 44 is more than ten times of the cross section of the first orifice 39, the cross section of the second orifice 44 becomes oversized. Then, the expected damping force becomes difficult to get even if the oil 31 flows in the second orifice 44. Therefore, it is even more difficult to get the expected damping force when the moving speed V is fast (VH in FIG. 3) .

For above reasons, the diameters of the first and the second orifices 39, 44 are defined between one-and-half to ten times, so that the "action effect" is more securely obtained. The diameter is further preferably between two to four times.

As described above, the kinetic viscosity of the oil 31 is four to ten centistokes (cSt) at 40°C.

Here, when the shock absorber 1 is repeatedly used, the temperature of the oil 31 rises, and then the kinetic viscosity tends to decrease. In general, the decrease width of the kinetic viscosity according to temperature is wider as the kinetic viscosity of the oil 31 is higher.

In general, the kinetic viscosity of the oil 31 at the temperature of 40°C is fifteen cSt, however, the decrease width of the kinetic viscosity according to temperature rising of the oil 31 becomes wider when this type of oil 31 is used. Then it is difficult to finely obtain the expected damping force to the shock absorber 1. At the same time, as in the above configuration, wider parts are subject to an effect (resistance) of the viscosity of the oil 31 as for the shock absorber 1 using a plurality of pistons. In order to refrain the effect as much as possible, it is advantageous to use the mixture with the low viscosity oil 31 lower than the 10 centistokes.
In Sections [0069] and [0146] the terms "wider parts" and "wider sections" mean "positions" (specifically orifices and damping force generation means). With increasing pistons, the orifices (39 and 44) and damping force generation means (34, 35, 46 and 47) also increase. These orifices and damping force generation means are influenced by the effect (resistance) of the viscosity of the oil. Accordingly, the positions are influenced by the effect of the viscosity of the oil.

On the other hand, when the viscosity of the oil 31 is less than four, the consumption increases and the durability lowers according to the decrease of the lubrication in the oil 31, because the viscosity of the oil 31 is too low.

Therefore, as described above, the kinetic viscosity of the oil 31 at the temperature of 40°C is defined between four to ten cSt, so that the "action effect" is more securely produced. The kinetic viscosity is further preferable to be between five to eight cSt.

The above is an example along with provided figures, however, the shock absorber 1 may be disposed upside down or horizontally or obliquely. The flow resistance (pressure loss) of the oil 31 in the first orifice 39 may be set higher than that of the second orifice 44, by setting the cross section of the first and the second orifices 39,44 are same each other, or by setting the length of the first orifice 39 longer than that of the second orifice 44. The first and the second orifices 39, 44 may be formed by a plurality of passing holes. The diameter (cross section) of these passing holes may be same each other, and the number of passing holes in the second orifice 44 are more than those of the first orifice 39.

The following figures show the embodiments 2 to 6. The respective embodiments are common in many points in the configuration and action effect. Therefore these common things are indicated by the same reference numeral then the same explanation is omitted, and the following is described mainly for those with different points. The configuration of the respective parts in the respective embodiment may be arranged for suitable match according to the object of the present invention and the action effect.

### Embodiment 2

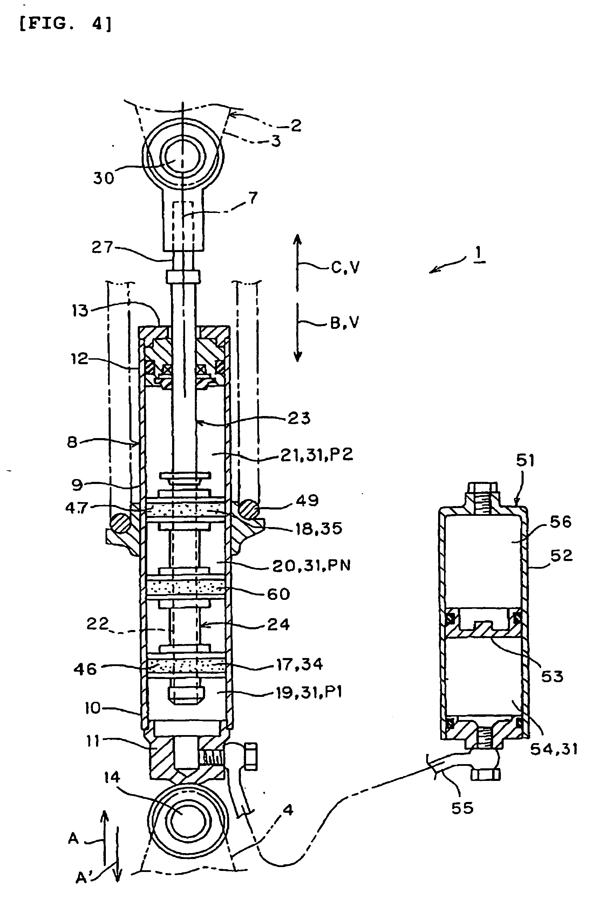

For further detail description of the present invention, the embodiment 2 is now explained according to the provided FIG. 4.

In FIG. 4, an intermediate piston 60 is inserted to the cylinder tube 8 in the way the intermediate piston 60 can slide in the axial direction. The intermediate piston 60 is disposed between the first and the second pistons 17, 18, and connected to the piston rod 23. The intermediate chamber 20 is divided to two chambers by the intermediate piston 60. Although not shown, the pressure side and the extension side intermediate damping force generating devices, which has same configuration and effect as extension side first damping force generating devices 34, 46, and pressure side and extension side second damping force generating devices 35, 47, is disposed to the pressure side.

In above case, the intermediate damping force generating device opens the valve according to the value between the first hydraulic pressure difference (P1-PN) and the second hydraulic pressure difference (PN-P2), and flows the oil 31 so as to passing through the intermediate piston 60. The cross section of the intermediate damping force generating device, is a value between the cross sections of the respective first and second orifices.

The intermediate piston 60 can be disposed two or more. The location to dispose can be selected freely.

### Embodiment 3

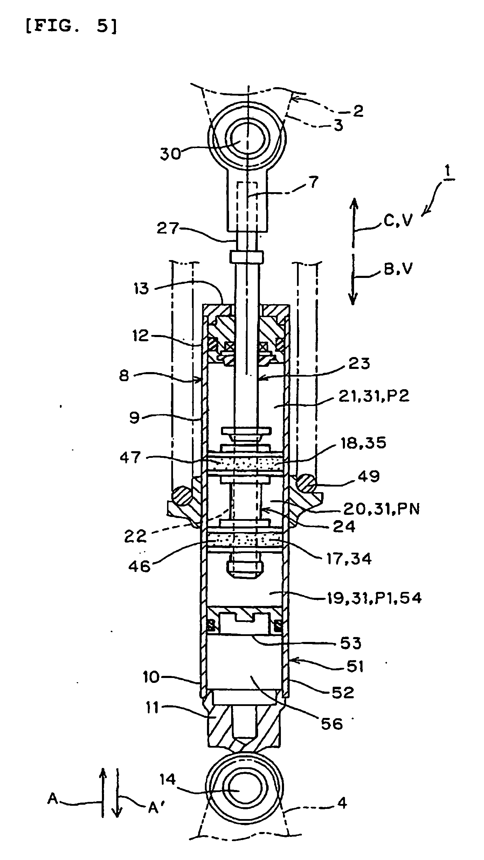

For further detail description of the present invention, the embodiment 3 is now explained according to the provided FIG. 5.

In FIG. 5, the accumulator 51 is formed in the cylinder tube 8 as a single unit. Specifically, the free piston 53 is inserted to the first chamber 19 in the way the free piston 53 can slide in the axial direction. The first chamber 19 is divided to two chambers by the free piston 53. The high-pressure nitrogen gas is enclosed to the opposite chamber to the first piston 17 as reference to the free piston 53.

The shock absorber 1 can be made compactly according to this embodiment.

### Embodiment 4

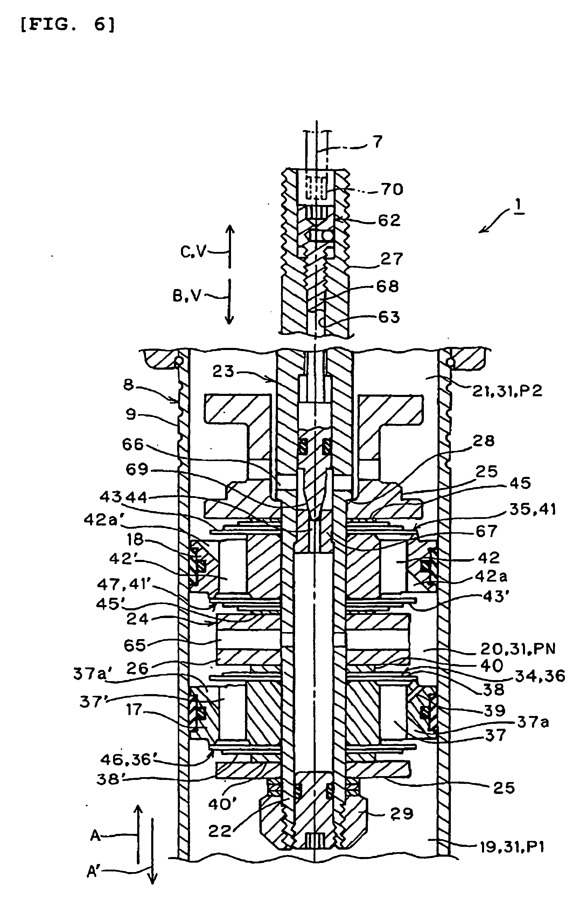

For further detail description of the present invention, the embodiment 4 is now explained according to the provided FIG. 6.

FIG. 6 shows compression state B of the shock absorber 1. The shock absorber 1 is equipped with a regulation device 62 that can change the cross sectional value of the intermediate, fast speed side second orifice 44 according to the external control from the shock absorber 1. The following describes about this regulation device 62.

Through-hole 63 is formed in the way it passes through the piston rod 23 on the shaft center 7. The opening in the one end 10 side (lower end side) of the through-hole in the tube body 9 is closed. The through-hole 63 is in communication with the intermediate chamber 20 through a passage 65 that is formed in the spacer 26 extending in the longitudinal direction. Also the through-hole 63 is in communication with the second chamber 21 through the other passage 66 formed in the piston rod 23. The plug 67 is pressed into the through-hole 63 between the both passages 65, 66. The second orifice 44 is formed on the shaft center 7 of the plug 67.

The operation bolt 68 is inserted from another end (upper end) of the through-hole 63 and screwed to the piston rod 23. The needle valve 69 is attached as a single unit to the entering end of the operation bolt 68. The needle valve 69 faces against the second orifice 44. When the operation bolt 68 is turned about by the tool 70, the needle valve 69 moves coordinately, so that the practical cross sectional value of the second orifice 44 may be changed. The needle valve 69 may be fixed to the piston rod 23 with this operation bolt 68 at the desired turning position.

According to the above configuration, a damping force characteristic of the second orifice 44 may be changed to various values, between the intermediate to fast range in the moving speed V, and then may obtain the required characteristic, by controlling the regulation device 62. On the other hand, the cross section of the first orifice 39 in the pressure side and the extension side first damping force generating devices 34, 46 are fixed and maintained in the certain value regardless of the control on the regulation device. Therefore, if the shock absorber is equipped to the vehicle 2, a desired driving feel can be obtained, while maintaining the "action effect".

### Embodiment 5

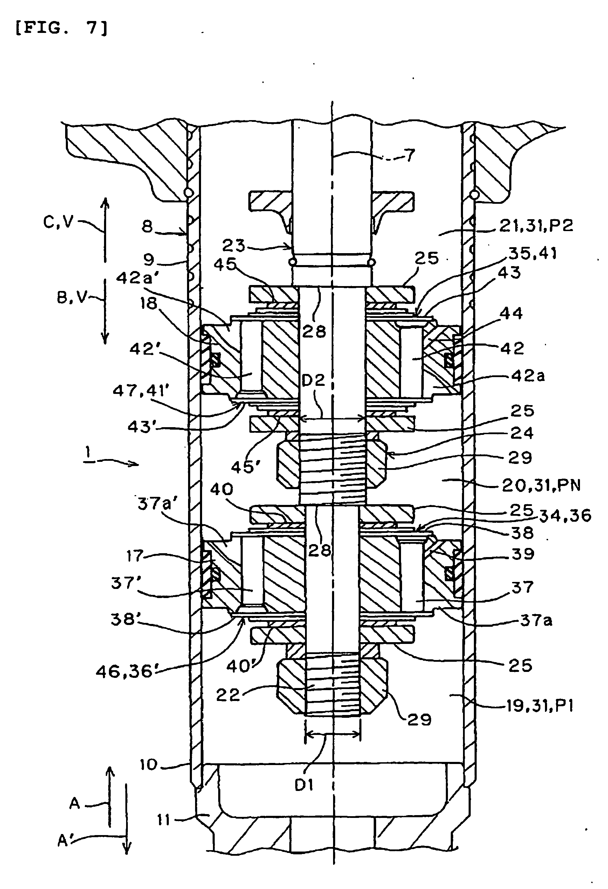

For further detail description of the present invention, the embodiment 5 is now explained according to the provided FIG. 7.

FIG. 7 shows the shock absorber 1 in the compression action B. An outer diameter D1 of a part of the piston rod 23 connected to the first piston 17 is smaller than an outer diameter D2 of another part of the piston rod 23 connected to the second piston 18. Another end side 27 of the piston rod 23 is bigger than the outer diameter D2. Therefore, at least two step-difference-surfaces 28 are formed in the piston rod 23. The first and the second pistons 17, 18 are fastened individually by a fastening tool 29 to the each step-difference-surface 28. Thus, the first and the second pistons 17, 18 are respectively connected to the piston rod 23 rigidly.

According to above configuration, the outer diameter D1 of a part of the piston rod 23 is smaller than the outer diameter D2 of another part of the piston rod 23, thus the effective area at the end surface in the axial direction of the first piston 17 excluding the through section of the piston rod 23 can be bigger than that of the second piston 18.

Flexibility for designing the pressure side and the extension side first damping force generating devices 34, 46 can be improved, which is for example the effective surface of the leaf valve bodies 38, 38' of the first valves 36, 36' in the pressure side and the extension side first damping force generating devices 34, 46 attached to the first piston 17 can be bigger, or for example the flexure of the leaf valve bodies 38, 38' can be made easily and precisely. As a result, a tiny value of the damping force is obtained precisely, which is caused by the flow of the oil 31 through the first valves 36, 36' in the pressure side and the extension side first damping force generating devices 34, 46 when the moving speed V is extremely slow. Therefore the "action effect" is further aided.

### Embodiment 6

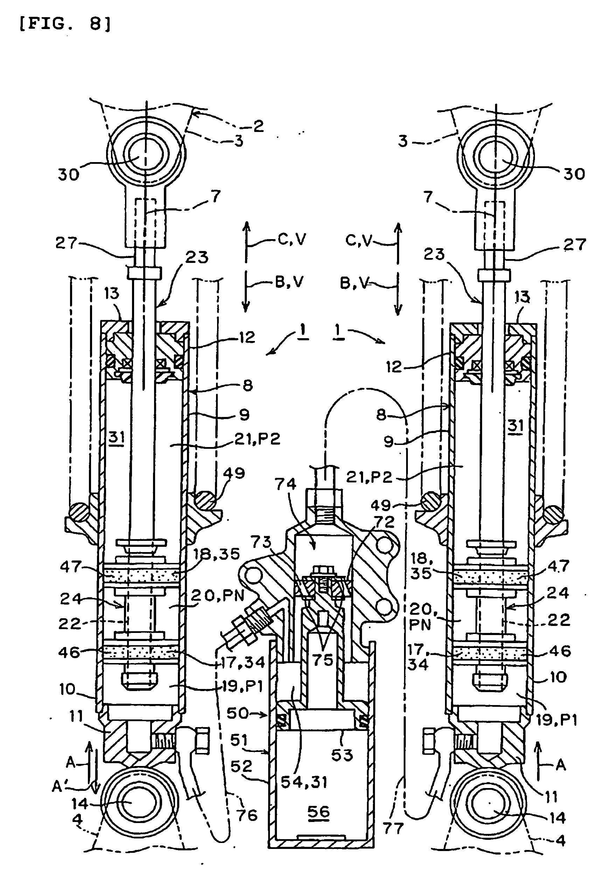

For further detail description of the present invention, the embodiment 6 is now explained according to the provided FIG. 8.

In FIG. 8, a suspension system of the vehicle 2 includes a pair of the shock absorbers 1 and an intermediate unit 50 disposed between these shock absorbers 1. The shock absorbers 1 are respectively constructed between the vehicle body side 3 and the each vehicle wheel side 4. In this case, the each vehicle wheel side 4 may be left or right vehicle wheel side, or may be front or rear vehicle wheel side. The intermediate unit 50 includes an accumulator 51 having another free piston 72 that is slidably inserted in the axial direction in the oil storage chamber 54 of the accumulator 51. Another free piston 72 is connected with the free piston 53, and slide as a single unit. Another free piston 72 divides the oil storage chamber 54 to two chambers.

A passage 74 communicates the first chambers 19 of the shock absorber 1 to each other through a narrow section 73. The narrow section 73 is disposed in another free piston 72, and includes a pair of valves 75 that has same configuration and action as the first valve 36. These valves 75 accept the reverse flow of the oil 31 to each other.

The passage 74 is constituted with, a first tube 76 for communicating between one of the first chambers 19 and one of two chambers in the oil storage chamber 54 divided by another free piston 72, and a second tube 77 for communicating between the other one of first chambers 19 and the other one of two chambers in the oil storage chamber 54, and the oil storage chamber 54.

Supposedly, one of the shock absorbers 1 (left side in FIG. 8) performs compression action B by the first input force A. In this case, the oil 31 in the first chamber 19 in the left side shock absorber 1 flows into the underside chamber of the free piston 72 among the oil storage chamber 54 in the accumulator 51 in the intermediate unit 50. Then, another free piston 72 moves downward in reference to the cylinder tube 52 accompanied by the free piston 53, and the capacity of the upper chamber in another free piston 72. Then, the oil 31 in the first chamber 19 in the other (right side) shock absorber 1 between both shock absorbers 1 is drawn into the chamber above another free piston 72, and accordingly the right side shock absorber 1 performs the compression action B.

The both shock absorbers 1 perform the same action at the same time, so the vehicle 2 is protected against rolling or pitting. At the time when the vehicle 2 makes big motion that is when the moving speed V is fast, the bulk modulus of the oil 31 in the intermediate chamber 20 and the second chamber 21 of the shock absorber 1 is regulated to be low, due to the configuration of each embodiment according to each claim in the present document. Therefore, the precision for an amount of oil 31 drawing in or out in reference to the intermediate unit 50 is improved. Also the precision for the "action effect" is improved.

The present invention can be achieved by suitably matching the individual components.

## Claims

1. Method for absorbing shocks by generating first and second damping forces in response to first and second input forces applied to a piston rod of a shock absorber to enter said piston rod into a cylinder tube or to evacuate the piston rod from said cylinder tube with first and second pressure side damping forces being generated on a pressure side of the shock absorber and first and second extension side damping forces being generated on an extension side of the shock absorber, wherein the first pressure and extension side damping forces exceed those ones of the second pressure and extension side when a moving speed of the piston rod relative to the cylinder tube is slow, while the second pressure and extension side damping forces exceed those ones of the first pressure and extension side when the moving speed of the piston rod relative to the cylinder tube is fast.

2. Hydraulic shock absorber comprising: a first and a second pistons (17, 18), which are inserted to a cylinder tube (8) slidably in the axial way, and divide an inside of this cylinder tube (8) to a first chamber (19), an intermediate chamber (20), and a second chamber (21) from its one end (10) to another end (12) in this order; a piston rod (23) in which one end (22) is connected to the first and the second pistons (17, 18), and another end protrudes from another end (12) of the cylinder tube (8) to outside of this cylinder tube (8); a pressure side first damping force generating device (34) for absorbing a first input force (A) by flowing an oil (31) from the first chamber (19) through the first piston (17) to the intermediate chamber (20), when the first input force (A) is applied from outside to enter the piston rod (23) into the cylinder tube (8); a pressure side second damping force generating device (35) for absorbing the first input force (A) by flowing the oil (31) from the intermediate chamber (20) through the second piston (18) to the second chamber (21), when the first input force (A) is applied; an extension side first damping force generating device (46) for absorbing a second input force (A') by flowing the oil (31) from the cylinder tube (8) through the first piston (17) to the first chamber (19), when the second input force (A') is applied from outside to evacuate the piston rod (23) from the cylinder tube (8); an extension side second damping force generating device (47) for absorbing the second input force (A') by flowing the oil (31) from the second chamber (21) through the second piston (18) to the intermediate chamber (20) when the second input force (A') is applied, in particular for performing the method of claim 1,
**characterized in that**
when a moving speed (V) of the piston rod (23) in relation to the cylinder tube (8) is slow (VL in FIG. 3), damping forces of the pressure side and the extension side first damping force generating devices (34, 46) are set greater than that of the pressure side and the extension side second damping force generating devices (35, 47), while, when the moving speed (V) is fast (VH in FIG. 3), the damping forces of the pressure side and the extension side second damping force generating devices (35, 47) are set greater than those of the pressure side and the extension side first damping force generating devices (34, 46), and a gas enclosure chamber (56) filled with gas is connected to the first chamber (19) through a free piston (53).

3. A hydraulic shock absorber according to claim 2, wherein the pressure side and the extension side first damping force generating devices (34, 46) comprise pressure side and extension side first valves (36, 36') for flowing the oil (31) to pass through the first piston (17) by a first hydraulic pressure difference (P1-PN) (PN-P1) between the first chamber (19) and the intermediate chamber (20), when the first and the second input forces (A, A') are applied, and first orifice (39) passing through the first piston (17).

4. A hydraulic shock absorber according to claims 2 or 3, wherein the pressure side and the extension side second damping force generating devices (35, 47) comprise pressure side and extension side second valves (41, 41') for flowing the oil (31) to pass through the second piston (18) by a second hydraulic pressure difference (PN-P2) (P2-PN) between the intermediate chamber (20) and the second chamber (21), when the first and the second input forces (A, A') are applied, and a second orifice (44) passing through the second piston (18).

5. A hydraulic shock absorber according to claims 3 or 4, wherein open valve pressure characteristics of the pressure side and the extension side first valves (36, 36') are set weaker than those of the pressure side and the extension side second valves (41, 41'); and a cross section of the first orifice (39) is set smaller than that of the second orifice (44).

6. A hydraulic shock absorber according to claim 4, wherein a cross section of the second orifice (44) is set one-and-half to ten times of a cross section of the first orifice (39).

7. A hydraulic shock absorber according to one of the claims 2 to 6, wherein kinetic viscosity of the oil (31) is set between four to ten centistokes (cSt) at 40°C.

8. A hydraulic shock absorber according to claim 4, wherein a regulation device (62) is disposed so that a value of a cross section of the second orifice (44) is variable.

9. A hydraulic shock absorber according to one of the claims 2 to 8, wherein an outer diameter (D1) of a part of the piston rod (23) connected to the first piston (17) is set smaller than an outer diameter (D2) of the other part of the piston rod (23) connected to the second piston (18).

10. A hydraulic shock absorber according to one of the claims 2 to 9, wherein another cylinder tube (52) is disposed as a separate unit from the cylinder tube (8), and the free piston (53) is inserted in the cylinder tube (52) slidably in the axial direction, and one of two chambers in the cylinder tube (52) divided by this free piston (53) is filled with the oil (31) then set as a oil storage chamber that communicates to the first chamber (19), while the other chamber is set as the gas enclosure chamber (56) filled with high pressure gas.

11. A hydraulic shock absorber according to one of the claims 2 to 10, wherein an intermediate piston (60) slidably inserted in the axial direction is disposed in the cylinder tube (8) so as to locate between the first piston (17) and the second piston (18) in the axial direction of the cylinder tube.

12. A hydraulic shock absorber according to one of the claims 2 to 11, wherein a pressure side and an extension side intermediate damping force generating devices that have same configuration and same action with the pressure side and the extension side first damping force generating devices (34, 46) or the pressure side and the extension side second damping force generating devices (35, 47) are disposed to the intermediate piston (60), and the intermediate piston (60) is connected to a one end (22) of the piston rod (23).

13. A hydraulic shock absorber according to one of the claims 2 to 12, wherein the free piston (53) is inserted in the first chamber (19) in the cylinder tube (8) slidably in the axial direction, between two chambers in the first chamber (19) comparted by the free piston (53), in reference to the free piston (53), an opposite side chamber to the first piston (17) is set as the gas enclosure chamber (56).

14. A hydraulic shock absorber according to one of the claims 8 to 13, wherein the regulation device (62) comprises a needle valve (69) inserted to a through-hole (63) formed on a shaft center (7) of the piston rod (23), and a cross section of a part of the second orifice (44) formed on the shaft center (7) of the piston rod (23), is variable by the needle valve (69).

15. A hydraulic shock absorber according to one of the claims 2 to 14, wherein the outer diameter (D1) of a part of the piston rod (23) connected to the first piston (17), is set smaller than the outer diameter (D2) of a part of the piston rod (23) connected to the second piston (18).

16. A hydraulic shock absorber according to one of the claims 2 to 15, wherein the hydraulic shock absorber (1) is applied to a suspension system of a vehicle (2), and constructed between a vehicle body side (3) of the vehicle (2) and respective vehicle wheel side (4) suspended to the vehicle body side (3).

## Patentansprüche

1. Verfahren zum Absorbieren von Stößen durch Erzeugen erster und zweiter Dämpfungskräfte in Abhängigkeit von ersten und zweiten Eingangskräften, aufgebracht auf eine Kolbenstange eines Stoßdämpfers, um die Kolbenstange in ein Zylinderrohr hineinzubringen oder die Kolbenstange aus dem Zylinderrohr herauszubringen, wobei erste und zweite Druckseiten- Dämpfungskräfte auf einer Druckseite des Stoßdämpfers erzeugt werden und erste und zweite Ausdehnungsseiten- Dämpfungskräfte auf einer Ausdehnungsseite des Stoßdämpfers erzeugt werden, wobei die ersten Druck- und die Ausdehnungsseiten- Dämpfungskräfte diejenigen der zweiten Druck- und Ausdehnungsseite übersteigen, wenn eine Bewegungsgeschwindigkeit der Kolbenstange im Verhältnis zu dem Zylinderrohr langsam ist, während die zweiten Druck- und Ausdehnungsseiten-Dämpfungskräfte diejenigen der ersten Druck- und Ausdehnungsseite übersteigen, wenn die Bewegungsgeschwindigkeit der Kolbenstange im Verhältnis zu dem Zylinderrohr schnell ist.

2. Hydraulischer Stoßdämpfer, aufweisend: einen ersten und einen zweiten Kolben (17, 18), die in ein Zylinderrohr (8) gleitbar in der axialen Weise eingesetzt sind, und ein Inneres dieses Zylinderrohres (8) in eine erste Kammer (19), eine Zwischenkammer (20) und eine zweite Kammer (21) von einem Ende (10) zu dem anderen Ende (12) in dieser Reihenfolge teilen, eine Kolbenstange (23), bei der ein Ende (22) mit den ersten und zweiten Kolben (17, 18) verbunden ist, und wobei ein weiteres Ende von dem anderen Ende (12) des Zylinderrohres (8) nach außerhalb dieses Zylinderrohres (8) vorspringt; eine erste Druckseiten- Dämpfungskrafterzeugungsvorrichtung (34) zum Absorbieren einer ersten Eingangskraft (A) durch Fließen eines Öls (31) aus der ersten Kammer (19) durch den ersten Kolben (17) in die Zwischenkammer (20), wenn die erste Eingangskraft (A) von außen aufgebracht wird, um die Kolbenstange (23) in das Zylinderrohr (8) hineinzubringen; eine zweite Druckseiten- Dämpfungskrafterzeugungsvorrichtung (35) zum Absorbieren der ersten Eingangskraft (A) durch Fließen eines Öls (31) aus der Zwischenkammer (20) durch den zweiten Kolben (18) in die zweite Kammer (21), wenn die erste Eingangskraft (A) aufgebracht wird; eine erste Ausdehnungsseiten- Dämpfungskrafterzeugungsvorrichtung (46) zum Absorbieren einer zweiten Eingangskraft (A') durch Fließen des Öls (31) aus dem Zylinderrohr (8) durch den ersten Kolben (17) in die erste Kammer (19), wenn die zweite Eingangskraft (A') von außen aufgebracht wird, um die Kolbenstange (8) aus dem Zylinderrohr (8) herauszuziehen; eine zweite Ausdehnungsseiten- Dämpfungskrafterzeugungsvorrichtung (47) zum Absorbieren einer zweiten Eingangskraft (A') durch Fließen des Öls (31) aus der zweiten Kammer (21) durch den zweiten Kolben (18) in die Zwischenkammer (20), wenn die zweite Eingangskraft (A') aufgebracht ist, insbesondere zum Ausführen des Verfahrens von Anspruch 1,
**dadurch gekennzeichnet, dass**
wenn eine Bewegungsgeschwindigkeit (V) der Kolbenstange (23) im Verhältnis zu dem Zylinderrohr (8) langsam ist (VL in Fig. 3), werden Dämpfungskräfte der ersten Druck- und Ausdehnungsseiten- Dämpfungskrafterzeugungsvorrichtung (34, 46) größer festgelegt als die der zweiten Druckseite- und Ausdehnungsseiten-Dämpfungskrafterzeugungsvorrichtung (35, 47), während, wenn die Bewegungsgeschwindigkeit (V) schnell ist (VH in Fig. 3), die Dämpfungskräfte der zweiten Druck- und Ausdehnungsseiten- Dämpfungskrafterzeugungsvorrichtung (35, 47) größer festgelegt werden als diejenigen der ersten Druck- und Ausdehnungsseiten- Dämpfungskrafterzeugungsvorrichtung (34, 46) und eine Gaseinschlußkammer (56), gefüllt mit Gas, mit der ersten Kammer (19) durch einen freien Kolben (53) verbunden ist.

3. Hydraulischer Stoßdämpfer nach Anspruch 2, wobei die erste Druck- und Ausdehnungsseiten- Dämpfungskrafterzeugungsvorrichtung (34, 46) erste Druck- und Ausdehnungsseiten- Ventile (36, 36') zum Fließen des Öls (31) aufweisen, um durch den ersten Kolben (17) durch eine erste hydraulische Druckdifferenz (P1-PN) (PN-P1) zwischen der ersten Kammer (19) und der Zwischenkammer (20) hindurchzugehen, wenn die erste und zweite Eingangskraft (A, A') aufgebracht werden, und wobei eine erste Drosselstelle (39) durch den ersten Kolben (17) hindurchgeht.

4. Hydraulischer Stoßdämpfer nach den Ansprüchen 2 oder 3, wobei die zweite Druck- und Ausdehnungsseiten- Dämpfungskrafterzeugungsvorrichtung (35, 47) zweite Druck- und Ausdehnungsseiten- Ventile (41, 41') zum Fließen des Öls (31) aufweisen, um durch den zweiten Kolben (18) durch eine zweite hydraulische Druckdifferenz (PN-P2) (P2-PN) zwischen der Zwischenkammer (20) und der zweiten Kammer (21) hindurchzugehen, wenn die erste und zweite Eingangskraft (A, A') aufgebracht werden, und wobei eine zweite Drosselstelle (44) durch den zweiten Kolben (18) hindurchgeht.

5. Hydraulischer Stoßdämpfer nach den Ansprüchen 3 oder 4, wobei offene Ventildruckcharakteristika der ersten Druck- und Ausdehnungsseiten- Ventile (36, 36') schwächer als diejenigen der zweiten Druck- und Ausdehnungsseiten- Ventile (41, 41') festgelegt werden; und ein Querschnitt der ersten Drosselstelle (39) kleiner als der der zweiten Drosselstelle (44) festgelegt ist.

6. Hydraulischer Stoßdämpfer nach Anspruch 4, wobei ein Querschnitt der zweiten Drosselstelle (44) eineinhalb bis zehnmal eines Querschnittes der ersten Drosselstelle (39) festgelegt ist.

7. Hydraulischer Stoßdämpfer nach einem der Ansprüche 2 bis 6, wobei die kinetische Viskosität des Öls (31) zwischen vier bis zehn Centistoke (cSt) bei 40° C festgelegt ist.

8. Hydraulischer Stoßdämpfer nach Anspruch 4, wobei eine Regelvorrichtung (62) so angeordnet ist, dass ein Wrt eines Querschnittes der zweiten Drosselstelle (44) variabel ist.

9. Hydraulischer Stoßdämpfer nach einem der Ansprüche 2 bis 8, wobei ein Außendurchmesser (D1) eines Teils der Kolbenstange (23), verbunden mit dem ersten Kolben (17), kleiner als ein Außendurchmesser (D2) des anderen Teils der Kolbenstange (23), verbunden mit dem zweiten Kolben (18), festgelegt ist.

10. Hydraulischer Stoßdämpfer nach einem der Ansprüche 2 bis 9, wobei ein weiteres Zylinderrohr (52) als eine separate Einheit von dem Zylinderrohr (8) angeordnet ist und der freie Kolben (53) in das Zylinderrohr (52) gleitbar in der axialen Richtung eingesetzt ist und eine der zwei Kammern in dem Zylinderrohr (52), geteilt durch diesen freien Kolben (53), mit dem Öl (31) gefüllt ist, dann als eine Ölspeicherkammer festgelegt ist, die mit der ersten Kammer (19) kommuniziert, während die andere Kammer als die Gaseinschlußkammer (56), gefüllt mit Hochdruckgas, festgelegt ist.

11. Hydraulischer Stoßdämpfer nach einem der Ansprüche 2 bis 10, wobei ein Zwischenkolben (60) gleitbar in der axialen Richtung in dem Zylinderrohr (8) angeordnet ist, um zwischen dem ersten Kolben (17) und dem zweiten Kolben (18) in der axialen Richtung des Zylinderrohrs angeordnet zu sein.

12. Hydraulischer Stoßdämpfer nach einem der Ansprüche 2 bis 11, wobei eine Druck- und eine Ausdehnungsseiten- Zwischendämpfungskrafterzeugungsvorrichtung, die dieselbe Konfiguration und dieselbe Wirkung mit der ersten Druck- und Ausdehnungsseiten- Dämpfungskrafterzeugungsvorrichtung (34, 46) oder der zweiten Druck- und Ausdehnungsseiten- Dämpfungskrafterzeugungsvorrichtung (35, 47) haben, an dem Zwischenkolben (60) angeordnet sind, und der Zwischenkolben (60) mit einem Ende (22) der Kolbenstange (23) verbunden ist.

13. Hydraulischer Stoßdämpfer nach einem der Ansprüche 2 bis 12, wobei der freie Kolben (53) in die erste Kammer (19) in dem Zylinderrohr (8) gleibar in der axialen Richtung eingesetzt ist, zwischen zwei Kammern in der ersten Kammer (19), abgeteilt durch den freien Kolben (53) in Bezug auf den freien Kolben (53), wobei eine gegenüberliegende Seitenkammer zu dem ersten Kolben (17) als die Gaseinschlußkammer (56) festgelegt ist.

14. Hydraulischer Stoßdämpfer nach einem der Ansprüche 8 bis 13, wobei die Regelvorrichtung (62) ein Nadelventil (69) aufweist, eingesetzt in eine Durchgangsbohrung (63), gebildet an einer Wellenmitte (7) der Kolbenstange (23), und ein Querschnitt eines Teils der zweiten Drosselstelle (44), gebildet an der Wellenmitte (7) der Kolbenstange (23), durch das Nadelventil (69) variabel ist.

15. Hydraulischer Stoßdämpfer nach einem der Ansprüche 2 bis 14, wobei der Au-βendurchmesser (D1) eines Teils der Kolbenstange (23), verbunden mit dem ersten Kolben (17), kleiner als der Außendurchmesser (D2) eines Teils der Kolbenstange (23), verbunden mit dem zweiten Kolben (18), festgelegt ist.

16. Hydraulischer Stoßdämpfer nach einem der Ansprüche 2 bis 15, wobei der hydraulische Stoßdämpfer (1) in einem Aufhängungssystem eines Fahrzeuges (2) angewandt und zwischen einer Fahrzeugkarosserieseite (3) des Fahrzeuges (2) und der jeweiligen Fahrzeugradseite (4), aufgehängt an der Fahrzeugkarosserieseite (3), gebildet ist.

## Revendications

1. Procédé pour absorber des chocs en produisant des première et seconde forces d'amortissement en réponse à des première et seconde forces d'entrée appliquées à une tige de piston d'un amortisseur pour faire pénétrer ladite tige de piston dans un tube cylindrique ou pour faire sortir la tige de piston dudit tube cylindrique, des première et seconde forces d'amortissement côté pression étant produites sur un côté pression de l'amortisseur et des première et seconde forces d'amortissement côté extension étant produites sur un côté extension de l'amortisseur, dans lequel les premières forces d'amortissement côtés pression et extension dépassent celles des seconds côtés pression et extension quand une vitesse de déplacement de la tige de piston par rapport au tube cylindrique est lente, tandis que les secondes forces d'amortissement côtés pression et extension dépassent celles des premiers côtés pression et extension quand la vitesse de déplacement de la tige de piston par rapport au tube cylindrique est rapide.

2. Amortisseur hydraulique comprenant : un premier et un second piston (17, 18), qui sont insérés dans un tube cylindrique (8) de manière coulissante de façon axiale, et qui divisent un intérieur de ce tube cylindrique (8) en une première chambre (19), une chambre intermédiaire (20), et une seconde chambre (21) depuis une extrémité particulière (10) jusqu'à une autre extrémité (12) dans cet ordre ; une tige de piston (23) dans laquelle une extrémité particulière (22) est reliée aux premier et second pistons (17, 18), et une autre extrémité dépasse d'une autre extrémité (12) du tube cylindrique (8) à l'extérieur de ce tube cylindrique (8) ; un dispositif de production de première force d'amortissement côté pression (34) pour absorber une première force d'entrée (A) par écoulement d'huile (31) depuis la première chambre (19) par l'intermédiaire du premier piston (17) jusqu'à la chambre intermédiaire (20), lorsque la première force d'entrée (A) est appliquée à partir de l'extérieur pour faire pénétrer la tige de piston (23) dans le tube cylindrique (8) ; un dispositif de production de seconde force d'amortissement côté pression (35) pour absorber la première force d'entrée (A) par écoulement de l'huile (31) depuis la chambre intermédiaire (20) par l'intermédiaire du second piston (18) jusqu'à la seconde chambre (21), lorsque la première force d'entrée (A) est appliquée ; un dispositif de production de première force d'amortissement côté extension (46) pour absorber une seconde force d'entrée (A') par écoulement de l'huile (31) depuis le tube cylindrique (8) par l'intermédiaire du premier piston (17) jusqu'à la première chambre (19), lorsque la seconde force d'entrée (A') est appliquée à partir de l'extérieur pour faire sortir la tige de piston (23) du tube cylindrique (8) ; un dispositif de production de seconde force d'amortissement côté extension (47) pour absorber la seconde force d'entrée (A') par écoulement de l'huile (31) depuis la seconde chambre (21) par l'intermédiaire du second piston (18) jusqu'à la chambre intermédiaire (20) lorsque la seconde force d'entrée (A') est appliquée, en particulier pour effectuer le procédé selon la revendication 1,
**caractérisé en ce que**
lorsqu'une vitesse de déplacement (V) de la tige de piston (23) par rapport au tube cylindrique (8) est lente (VL à la figure 3), les forces d'amortissement des dispositifs de production de première force d'amortissement côté pression et côté extension (34, 46) sont fixées plus grandes que celles des dispositifs de production de seconde force d'amortissement côté pression et côté extension (35, 47), tandis que, lorsque la vitesse de déplacement (V) est rapide (VH à la figure 3), les forces d'amortissement des dispositifs de production de seconde force d'amortissement côté pression et côté extension (35, 47) sont fixées plus grandes que celles des dispositifs de production de première force d'amortissement côté pression et côté extension (34, 46), et une chambre formant enceinte de gaz (56) remplie de gaz est reliée à la première chambre (19) par l'intermédiaire d'un piston libre (53).

3. Amortisseur hydraulique selon la revendication 2, dans lequel les dispositifs de production de première force d'amortissement côté pression et côté extension (34, 46) comprennent des premières soupapes côté pression et côté extension (36, 36') pour l'écoulement de l'huile (31) pour passer à travers le premier piston (17) par une première différence de pression hydraulique (P1-PN) (PN-P1) entre la première chambre (19) et la chambre intermédiaire (20), lorsque les première et seconde forces d'entrée (A, A') sont appliquées, et un premier orifice (39) passant à travers le premier piston (17).

4. Amortisseur hydraulique selon les revendications 2 ou 3, dans lequel les dispositifs de production de seconde force d'amortissement côté pression et côté extension (35, 47) comprennent des secondes soupapes côté pression et côté extension de (41, 41') pour l'écoulement de l'huile (31) pour passer à travers le second piston (18) par une seconde différence de pression hydraulique (PN-P2) (P2-PN) entre la chambre intermédiaire (20) et la seconde chambre (21), lorsque les première et seconde forces d'entrée (A, A') sont appliquées, et un second orifice (44) passant à travers le second piston (18).

5. Amortisseur hydraulique selon les revendications 3 ou 4, dans lequel des caractéristiques de pression de soupape ouverte des premières soupapes côté pression et côté extension (36, 36') sont fixées plus faibles que celles des secondes soupapes côté pression et côté extension (41, 41') ; et une section transversale du premier orifice (39) est fixée plus petite que celle du second orifice (44).

6. Amortisseur hydraulique selon la revendication 4, dans lequel une section transversale du second orifice (44) est fixée à une fois et demi à dix fois une section transversale du premier orifice (39).

7. Amortisseur hydraulique selon l'une des revendications 2 à 6, dans lequel la viscosité cinétique de l'huile (31) est fixée entre quatre à dix centistokes (cSt) à 40 °C.

8. Amortisseur hydraulique selon la revendication 4, dans lequel un dispositif de régulation (62) est disposé de sorte qu'une valeur d'une section transversale du second orifice (44) est variable.

9. Amortisseur hydraulique selon l'une des revendications 2 à 8, dans lequel un diamètre extérieur (D1) d'une partie de la tige de piston (23) reliée au premier piston (17) est fixé plus petit qu'un diamètre extérieur (D2) de l'autre partie de la tige de piston (23) reliée au second piston (18).

10. Amortisseur hydraulique selon l'une des revendications 2 à 9, dans lequel un autre tube cylindrique (52) est disposé en tant qu'unité distincte du tube cylindrique (8), et le piston libre (53) est inséré dans le tube cylindrique (52) de manière coulissante dans la direction axiale, et une des deux chambres dans le tube cylindrique (52) divisé par ce piston libre (53) est remplie par l'huile (31) ensuite mise en tant que chambre de stockage d'huile qui communique avec la première chambre (19), tandis que l'autre chambre est mise en tant que chambre formant enceinte de gaz (56) remplie par un gaz à haute pression.

11. Amortisseur hydraulique selon l'une des revendications 2 à 10, dans lequel un piston intermédiaire (60) inséré de manière coulissante dans la direction axiale est disposé dans le tube cylindrique (8) de façon à se situer entre le premier piston (17) et le second piston (18) dans la direction axiale du tube cylindrique.

12. Amortisseur hydraulique selon l'une des revendications 2 à 11, dans lequel des dispositifs de production de force d'amortissement intermédiaire côté pression et côté extension, qui ont la même configuration et la même action que les dispositifs de production de première force d'amortissement côté pression et côté extension (34, 46) ou que les dispositifs de production de seconde force d'amortissement côté pression et côté extension (35, 47), sont disposés sur le piston intermédiaire (60), et le piston intermédiaire (60) est relié à une extrémité particulière (22) de la tige de piston (23).

13. Amortisseur hydraulique selon l'une des revendications 2 à 12, dans lequel le piston libre (53) est inséré dans la première chambre (19) dans le tube cylindrique (8) de manière coulissante dans la direction axiale, entre deux chambres dans la première chambre (19) compartimentées par le piston libre (53), en se référant au piston libre (53), une chambre côté opposé au premier piston (17) est mise en tant que chambre formant enceinte de gaz (56).

14. Amortisseur hydraulique selon l'une des revendications 8 à 13, dans lequel le dispositif de régulation (62) comprend une soupape à pointeau (69) insérée dans un trou traversant (63) formé sur un centre d'arbre (7) de la tige de piston (23), et une section transversale d'une partie du second orifice (44) formé sur le centre d'arbre (7) de la tige de piston (23) est variable par la soupape à pointeau (69).

15. Amortisseur hydraulique selon l'une des revendications 2 à 14, dans lequel le diamètre extérieur (D1) d'une partie de la tige de piston (23) reliée au premier piston (17) est fixé plus petit que le diamètre extérieur (D2) d'une partie de la tige de piston (23) reliée au second piston (18).

16. Amortisseur hydraulique selon l'une des revendications 2 à 15, dans lequel l'amortisseur hydraulique (1) est appliqué à un système de suspension d'un véhicule (2) et disposé entre un côté carrosserie de véhicule (3) du véhicule (2) et un côté roue de véhicule respective (4) suspendue au côté carrosserie de véhicule (3).
